# EUROPEAN PATENT APPLICATION

(11) **EP 0 106 357 A2**
(43) Date of publication of application: **25.04.1984**
(21) Application number: 83110376.7
(22) Date of filing: 18.10.1983
(51) Int. Cl.: G03C 5/54, G03C 1/02, C09B 29/00

(54) **Heat-developable color photographic material**

(30) Priority: 18.10.1982 JP 182605/82
(71) Applicant: FUJI PHOTO FILM CO., LTD., Kanagawa-ken, 250-01 (JP)
(72) Inventor: Kitaguchi, Hiroshi, Minami Ashigara-shi Kanagawa (JP); Sato, Kozo, Minami Ashigara-shi Kanagawa (JP); Fujita, Shinsaku, Minami Ashigara-shi Kanagawa (JP); Hara, Hiroshi, Minami Ashigara-shi Kanagawa (JP); Naito, Hideki, Minami Ashigara-shi Kanagawa (JP); Sawada, Satoru, Minami Ashigara-shi Kanagawa (JP)
(74) Representative: Grünecker, Kinkeldey, Stockmair & Schwanhäusser Anwaltssozietät

(57) **Abstract**

A heat-developable color photographic material is disclosed. The material is comprised of a support having thereon a light-sensitive silver halide, a hydrophilic binder and a dye releasing redox compound. The dye releasing redox compound is represented by a general formula (la) or (lb): 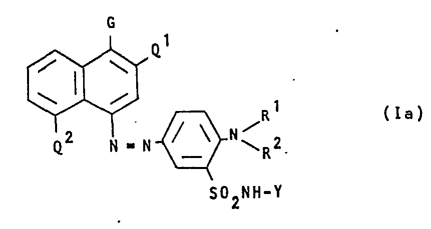 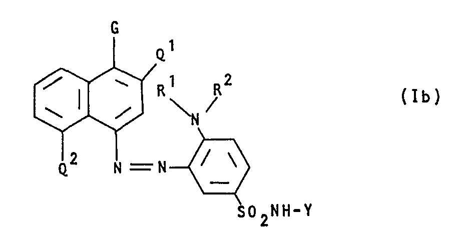 the substituents are defined within the specification. The material can easily provide a clear and stable color image by imagewise exposure to light and heat-development. A method for forming a color image using the material is also disclosed.

## Description

### FIELD OF THE INVENTION

The present invention relates to a process of forming a color image by heat-development. Particularly, the present invention relates to a novel process for obtaining a color image by heat diffusion transfer of a dye released upon heat-development of a heat-developable color photographic material containing a dye releasing redox compound which releases a diffusible dye upon heat-development into a support capable of receiving a dye.

### BACKGROUND OF THE INVENTION

Photographic processes using silver halide have been most widely used in the past due to their excellent photographic properties such as sensitivity or control of gradation, etc., as compared with other photographic processes, such as an electrophotographic process or a diazo photographic process. In recent years, with respect to image formation processes for photographic materials using silver halide, many techniques capable of easily and quickly obtaining images have been developed by changing the conventional wet process using a developing solution into a dry development process such as a process using heat, etc.

Heat-developable photographic materials are known in the field of these techniques. Heat-developable photographic materials and processes therefor have been described in U.S. Patents 3,152,904, 3,301,678, 3,392,020 and 3,457,075, British Patents 1,131,108 and 1,167,777, and Research Disclosure, No. 170229, pages 9 to 15 (June, 1978).

Many different processes for obtaining color images have been proposed. With respect to processes for forming color images by the reaction of an oxidation product of a developing agent with a coupler, it has been proposed to use a p-phenylenediamine type reducing agent and a phenolic coupler or an active methylene- coupler as described in U.S. Patent 3,531,286, a p-aminophenol type reducing agent as described in U.S. Patent 3,761,270, a sulfonamidophenol type reducing agent as described in Belgian Patent 802,519 and Research. Disclosure, pages 31 and 32 (Sept., 1975) and the combination of a sulfonamidophenol type reducing agent and a 4-equivalent coupler as described in U.S. Patent 4,021,240. These processes, however, are disadvantageous in that turbid color images are formed, because a reduced silver image and a color image are simultaneously formed on the exposed area after heat-development. In order to eliminate these disadvantages, there have been proposed a process which comprises removing a silver image by liquid processing or a process which comprises transferring only the dye to another layer, for example, a sheet having an image receiving layer. However, the latter process is not desirable because it is not easy to transfer only the dye as distinguishable from unreacted substances.

Another process which comprises introducing a nitrogen containing heterocyclic group into a dye, forming a silver salt and releasing a dye by heat-development has been described in Research Disclosure, No. 1966, pages 54 to 58 (May; 1978). According to this process, clear images cannot be obtained, because it is difficult to control the release of dyes from nonexposed areas, and thus it is not a conventionally applicable process.

Also, processes for forming a positive color image by a silver dye bleach process utilizing heat-development, with useful dyes and methods for bleaching have been described, for example, in Research Disclosure, No. 14433, pages 30 to 32 (April, 1976), ibid., No. 15227,' pages 14 and 15 (Dec., 1976) and U._{S}. Patent 4,235,957.

However, this process requires an additional step and an additional material for accelerating bleaching of dyes, for example, heating with a superposed sheet with an activating agent. Furthermore, it is not desirable because the resulting color images are gradually reduced and bleached by coexisting free silver during long periods of preservation.

Moreover, a process for forming a color image utilizing a leuco dye has been described, for example, in U.S. Patents 3,985,565 and 4,022,617. However, this process is not desirable because it is difficult to stably incorporate the leuco dye in the photographic material and coloration gradually occurs during preservation.

### SUMMARY OF THE INVENTION

The present invention provides a novel process for forming a color image by heat-development, eliminating the drawbacks present in known materials.

Therefore, an object of the present invention is to provide a novel process for forming a color image which comprises heat transferring a hydrophilic dye released upon heat-development into an image receiving material containing a mordant to obtain a color image.

Another object of the present invention is to provide a process for obtaining a clear color image by a simple procedure.

Still another object of the present invention is to provide a process for obtaining a color image which is stable for a long period of time.

These and other objects of the present invention will become more apparent from the following detailed description and examples.

These objects of the present invention are accomplished with a heat-developable color photographic material comprising a support having thereon a light-sensitive silver halide, a hydrophilic binder, a dye releasing activator.and a dye releasing redox compound which is reducing to the silver halide and capable of releasing a hydrophilic dye and represented by the following general formula (Ia) or (Ib): 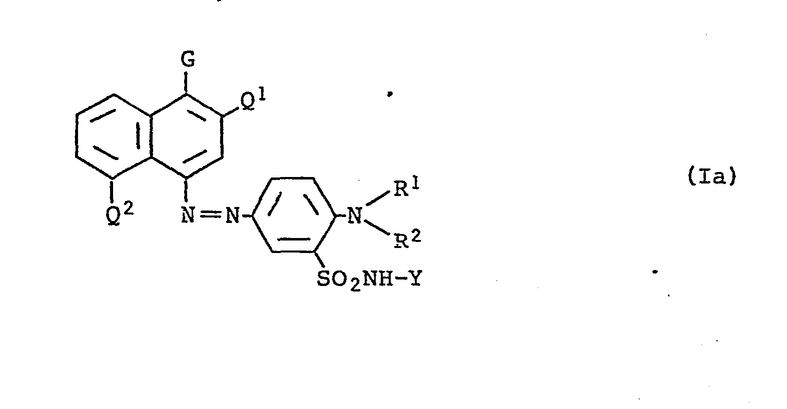 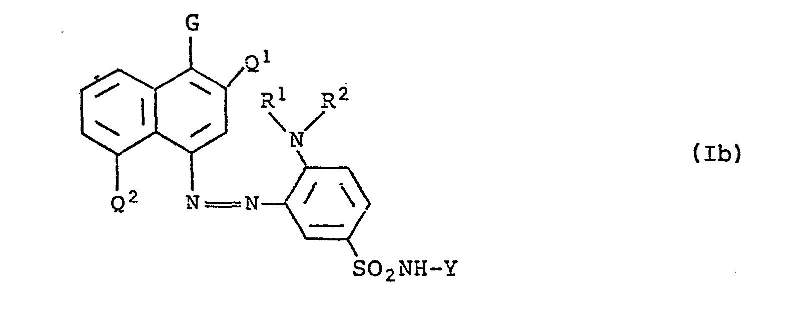 wherein Q¹ represents a hydrogen atom, a halogen atom, a sulfamoyl group represented by the formula -SO₂NR³R⁴ wherein R³ represents a hydrogen atom, an alkyl group or a substituted alkyl group; R⁴ represents a hydrogen atom, an alkyl group, a substituted alkyl group, an aralkyl group or an aryl group; and R³ and R⁴ may combine directly or through an oxygen atom to form a ring; a group represented by the formula -SO²R⁵ wherein R⁵ represents an alkyl group, a substituted alkyl group or an aralkyl group; a carboxy group, a group represented by the formula -COOR⁶ wherein R⁶ represents an alkyl group, a substituted alkyl group, a phenyl group or a substituted phenyl group; or a group represented by the formula -CONR³R⁴ wherein R³ and R⁴ each has the same meaning as defined above; Q² represents a hydroxy group, a group represented by the formula -NHCOR⁷ or a group represented by the formula -NHSO₂R⁷ wherein R⁷ represents an alkyl group, a substituted alkyl group, an aralkyl group or an aryl group; G represents a hydroxy group or a group capable of forming a hydroxy group by hydrolysis; _{R}¹ and _{R}², which may be the same or different, each represents an alkyl group or a substituted alkyl group; and R¹ and R² may combine with each other and represent an atomic group necessary to form a 5-membered or 6- membered heterocyclic ring; and Y represents a group represented by the following general formulae (II) to (IX): 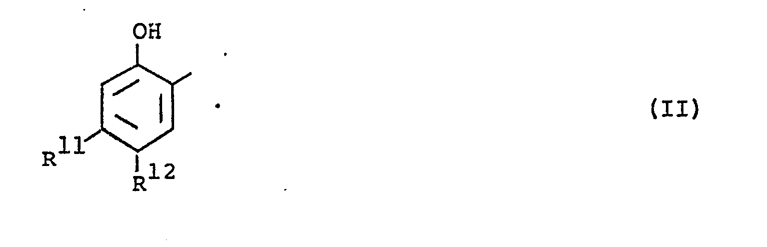 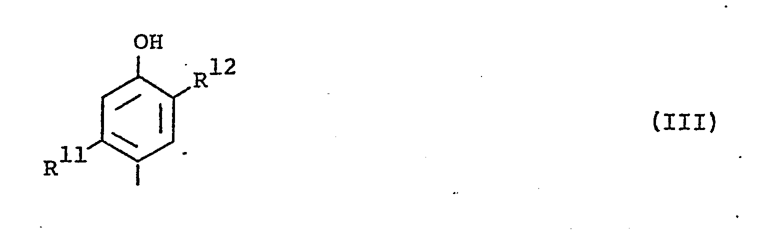 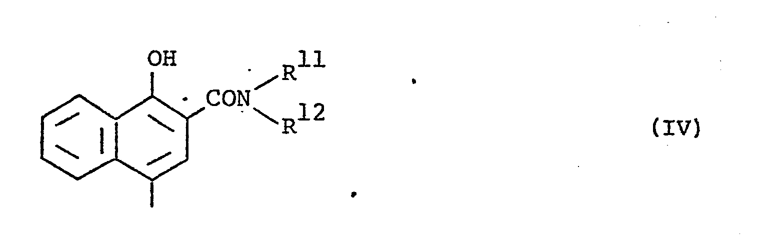 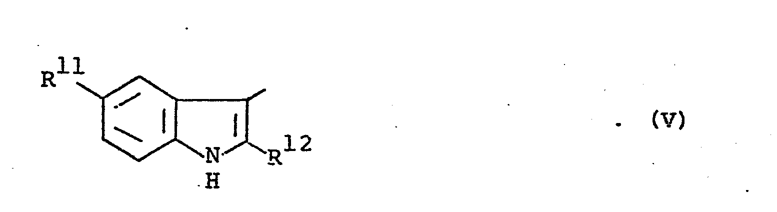 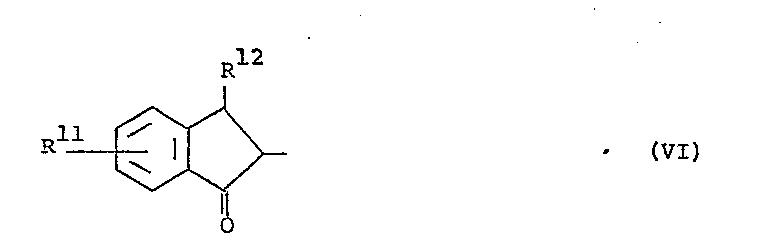 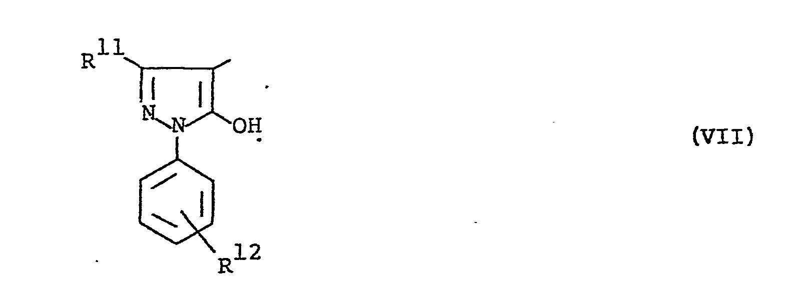 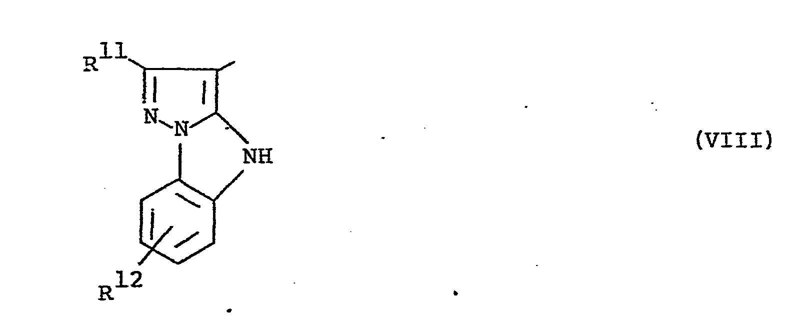 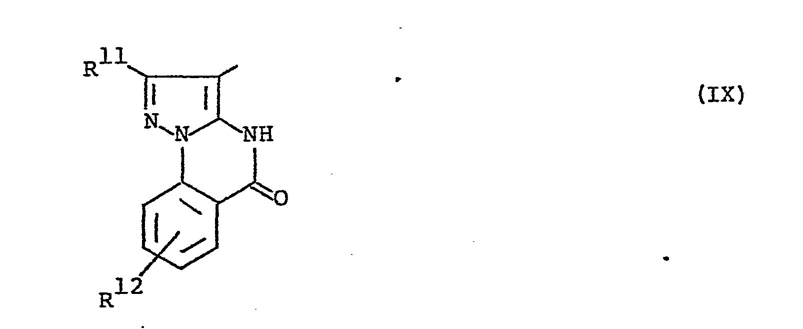 wherein _{R}¹¹ and R¹² each represents a hydrogen atom or a substituent selected from an alkyl group, a cycloalkyl group, an aryl group, an alkoxy group, an aryloxy group, an aralkyl group, an acyl group, an acylamino group, an alkylsulfonylamino group, an arylsulfonylamino group, an aryloxyalkyl group, an alkoxyalkyl group, an N-substituted carbamoyl group, an N-substituted sulfamoyl group, a halogen atom, an alkylthio group or an arylthio group, and the alkyl moiety and the aryl moiety in the above-described substituents may be further substituted with an alkoxy group, a halogen atom, a hydroxy group, a cyano group, an acyl group, an acylamino group, a substituted carbamoyl group, a substituted sulfamoyl group, an alkylsulfonylamino group, an arylsulfonylamino group, a substituted ureido group or a carbalkoxy group, and the hydroxy group and the amino group included in Y may be protected by a protective group capable of reproducing the hydroxy group and the amino `group by the action of a nucleophilic agent.

### DETAILED DESCRIPTION OF THE INVENTION

The heat-developable color photographic material of the present invention can simultaneously provide a silver image having a negative-positive relationship to the original and a diffusible dye on the part corresponding to the silver image utilizing only heat-development after imagewise exposure to light. That is, when the heat-developable color photographic material of the present invention is imagewise exposed to light and developed by heating, an oxidation-reduction reaction occurs between an exposed light-sensitive silver halide and a reducing dye releasing redox compound to form a silver image in the exposed area. In this step, the dye releasing redox compound is oxidized by the silver halide to form an oxidized product. This oxidized product is cleaved in the presence of a dye releasing activator and consequently the hydrophilic diffusible dye is released. Accordingly, the silver image and the diffusible dye are formed in the exposed area, and a color image is obtained by transferring the diffusible dye.

The reaction of releasing a diffusible dye according to the present invention is completed with a dry film under high'temperatures. This releasing reaction of a diffusible dye is believed to be a reaction by the so-called attack with a nucleophilic agent and is usually carried out in a liquid. In the present invention, the dye releasing redox compounds generally show a high reaction rate even in the dry film, although the rate varies depending on a kind of the dye releasing redox compounds. The reaction rates found were unexpectedly high. Further, the dye releasing redox compound according to the present invention can undergo an oxidation-reduction reaction with silver halide without the assistance of the so-called auxiliary developing agent. This is also an unexpected result based on previous information of what may happen at ambient temperature.

Of the dye releasing redox compounds according to the present invention, those represented by the general formula (Ia) are particularly preferred.

In the above-described general formula (Ia) or (Ib), the compound is characterized by the presence of the amino group on the ortho position or the para position of the phenylazo group. Due to the presence of the amino group, a heat transferred magenta dye image having an excellent color hue is obtained and in addition the fading-in-light and the fading-in-dark of the transferred image are markedly improved and thus the durability of color images both in a light place and in dark place is extremely improved. Further, the sensitivity is increased when subjected to the heat-development and thus a high-speed heat-developable color photographic material can be provided.

The magenta dye releasing redox compound according to the present invention is described in greater detail below.

The alkyl group or the substituted alkyl group represented by R¹ and _{R}² can be a straight chain, branched chain or cyclic alkyl group. Preferred examples.include an alkyl group having from 1 to 6 carbon atoms, more preferably from 1 to 4 carbon atoms (e.g., a methyl group, an ethyl group, an n-propyl group, an isopropyl group, an n-butyl group, a cyclohexyl group, etc.), a substituted alkyl group having from 1 to 10 carbon atoms, more preferably from 1 to 5 carbon atoms substituted with an alkoxy group or a halogen atom, etc. (e.g., a methoxyethoxyethyl group, a methoxyethyl group, a chloroethyl group, etc.), and the like.

Further, the atomic groups necessary to form a 5-membered or 6-membered heterocyclic ring by connecting R¹ and R² include carbon atom chains such as an alkylene chain of from 4 to 6 carbon atoms (e.g., an alkylene chain capable of forming a 5- or 6-membered ring together with the nitrogen atom such as -(CH₂)₄-, -(CH₂)₅-, -CH₂CH₂CH₂CH₂CH(CH₃)-, -CH₂CH₂CH₂CH(CH₃)CH₂- or -CH₂CH₂CH(CH₃)CH₂CH₂-) and carbon atom chains including an oxygen atom such as -CH₂CH₂-O-CH₂CH₂- or -CH₂CH(CH₃)-O-CH(CH₃)CH₂-.

In the sulfamoyl group represented by the formula -SO₂NR³R⁴ for Q , R3is preferably a hydrogen atom, an alkyl group having from 1 to 8 carbon atoms, more preferably from 1 to 4 carbon atoms or a substituted alkyl group having from 1 to 8 carbon atoms, more preferably from 1 to 4 carbon atoms in the alkyl moiety. R⁴ is preferably a hydrogen atom, an alkyl group having from 1 to 8 carbon atoms, more preferably from 1 to 4 carbon atoms, a substituted alkyl group having from 1 to 8 carbon atoms, more preferably from 1 to 4 carbon atoms in the alkyl moiety, an aralkyl group, a phenyl group or a substituted phenyl group having from 6 to 9 carbon atoms. Also, _{R}³ and _{R}⁴ may be combined directly or through an oxygen atom to form a 5- or 6-membered ring.

Of the compounds represented by the general formula (Ia) or (Ib) those in which (1) R³ and R⁴ each represents a hydrogen atom and (2) one of R³ and R⁴ represents a hydrogen atom and the other of R³ and R4 represents an alkyl group having from 1 to 4 carbon atoms, are particularly preferred due to the ready availability of their starting materials and the excellent transferability of the dye compound formed. The same is true for the -CONR³R⁴ group for Q .

With respect to the -_{S02R}⁵ group for _{Q}¹, R⁵ preferably represents an alkyl group having from 1 to 8 carbon atoms, a substituted alkyl group having from 1 to 8 carbon atoms in the alkyl moiety or an aralkyl group. In particular, an alkyl group having from 1 to 4 carbon atoms and a benzyl group are preferred due to the ready availability of the starting materials and excellent transferability of the dye compound formed.

In the case of the -COOR⁶ group for Q , R preferably represents an alkyl group having from 1 to 8 carbon atoms, more preferably from 1 to 4 carbon atoms, a substituted alkyl group having from 1 to 8 carbon atoms, more preferably from 1 to 4 carbon atoms in the alkyl moiety, a phenyl group or a substituted phenyl group having from 6 to 9 carbon atoms.

. Examples of suitable substituents making up the above-described substituted alkyl groups represented by R to R include one or more of a cyano group, an alkoxy group, a hydroxy group, a carboxy group, a sulfo group, etc. Further, examples of suitable substituents which can be present in the above-described substituted phenyl group represented by R4 and R6 include a hydroxy group, a halogen atom, a carboxy group, a sulfo group, a sulfamoyl group, etc.

Examples of G include a hydroxy group or a salt thereof such as an alkali metal salt (e.g., -O⁻Li⁺, -O⁻K⁺ or -O⁻Na⁺) or a photographically inert ammonium salt (e.g., -O⁻NH₄⁺, -O⁻NH(CH₃)₃⁺, -O⁻N(C₂H₅)₄+, etc.). G also represents a hydrolyzable acyloxy group represented by the formula 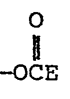 or 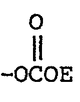 wherein E represents an alkyl group, a substituted alkyl group, a phenyl group or a substituted phenyl group. Examples of the hydrolyzable acyloxy groups include, for example, 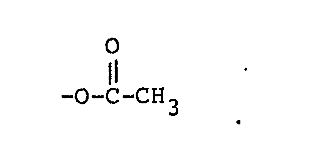 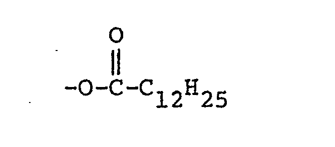 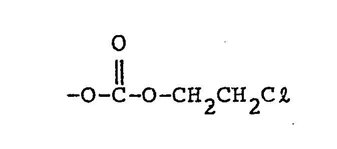 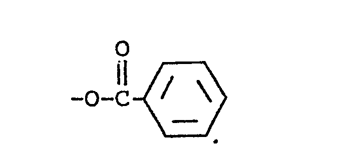 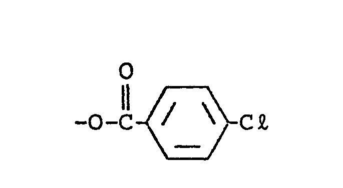 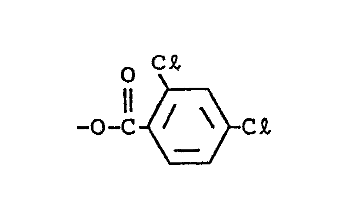 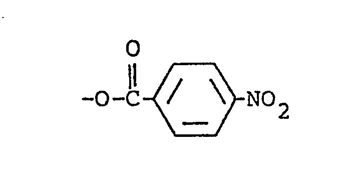 etc., but should not be limited thereto.

Characteristics required for the reducing group Y are as follows.
1. It is rapidly oxidized by the silver halide to effectively release a diffusible dye for image formation by the function of the dye releasing activator.
2. The reducing group Y has an extensive hydrophobic property, because it is necessary for the dye releasing redox compound to be immobilized in a hydrophilic or hydrophobic binder and that only the released dye have diffusibility.
3. It has excellent stability to heat and to the dye releasing activator and does not release the image forming dye until it is oxidized; and
4. It is easily synthesized.

In the following, specific examples of preferred reducing groups Y which satisfy the above-described requirements are shown. In the example, - (chemical bond) represents the bond to the dye portion.

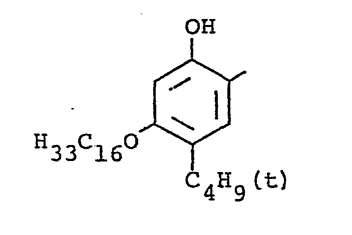

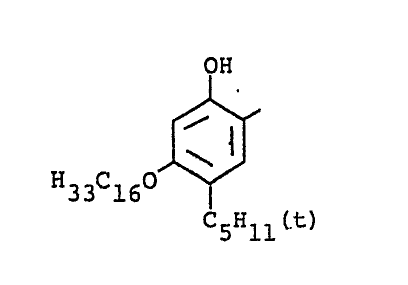

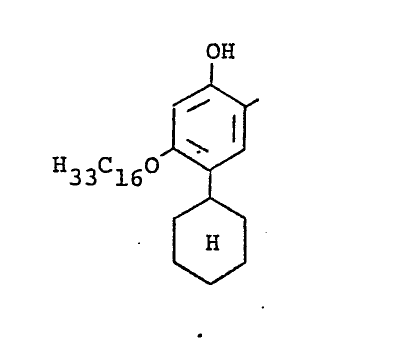

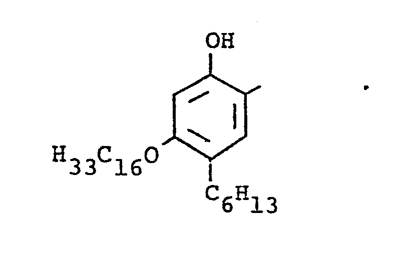

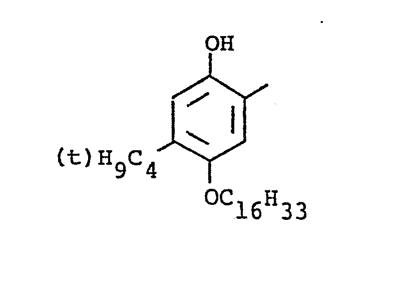

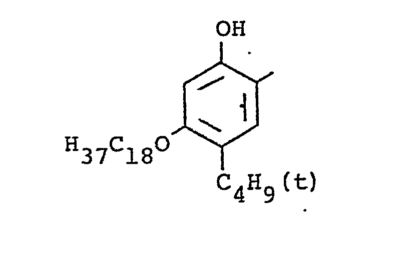

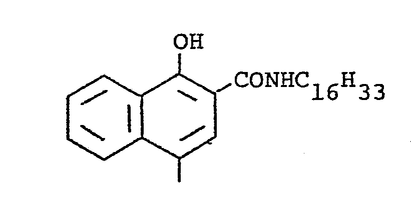

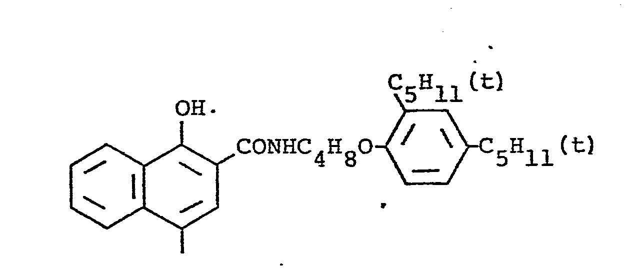

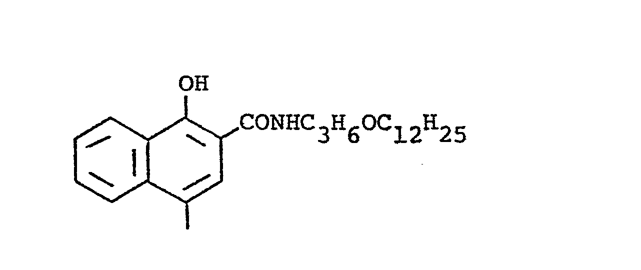

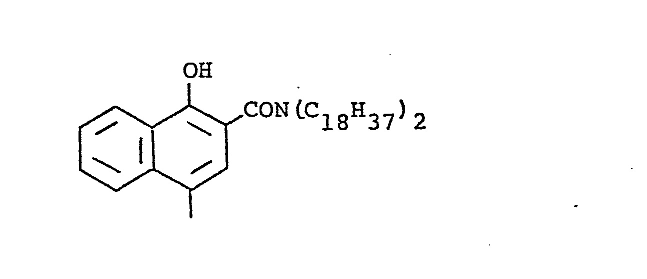

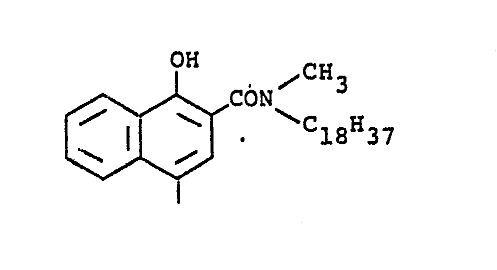

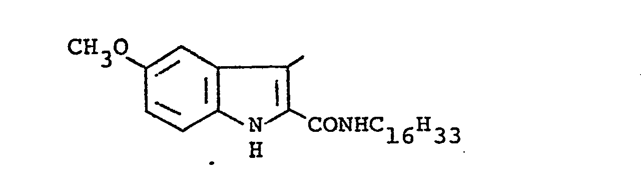

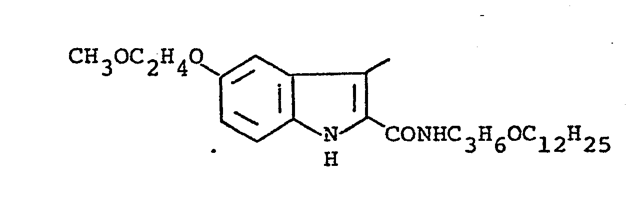

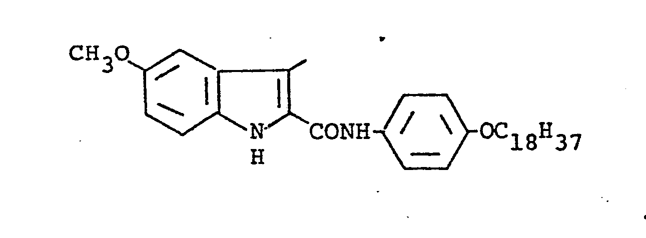

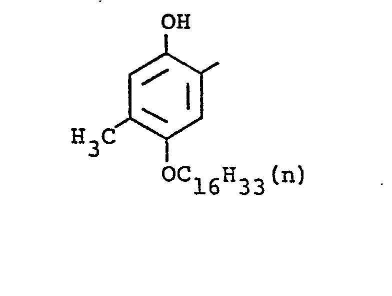

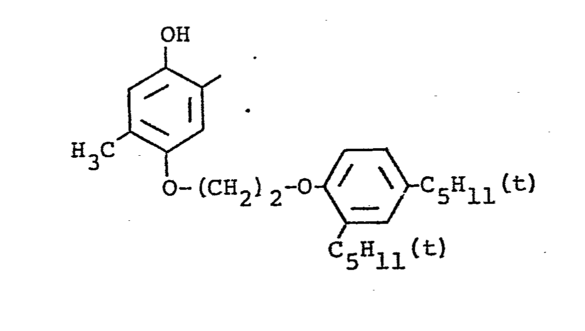

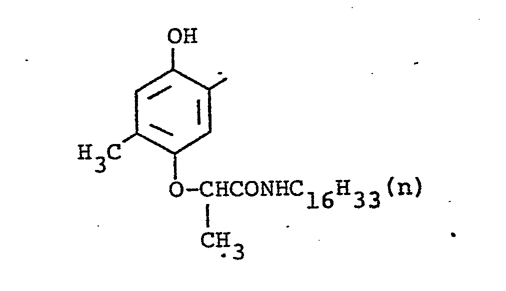

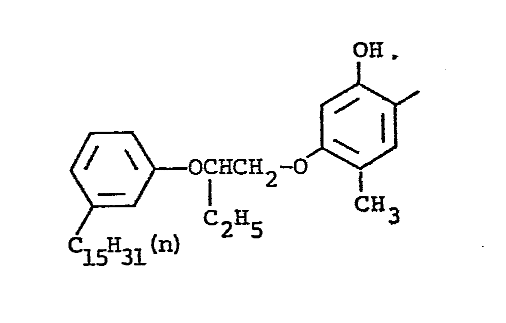

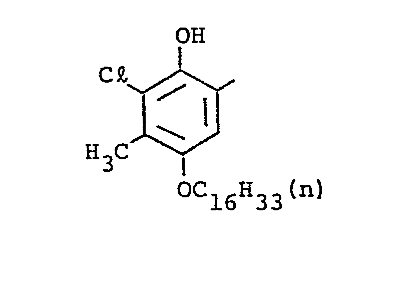

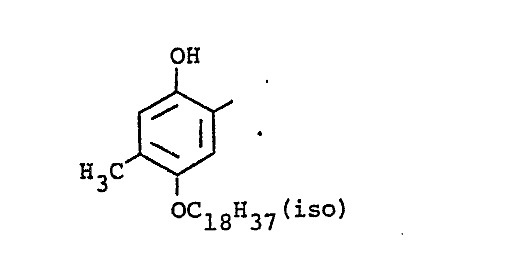

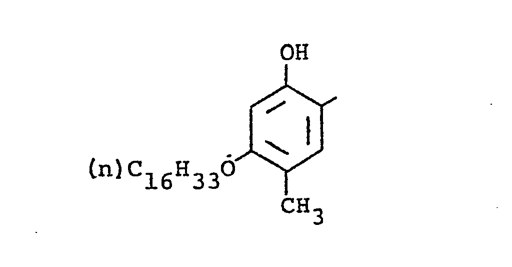

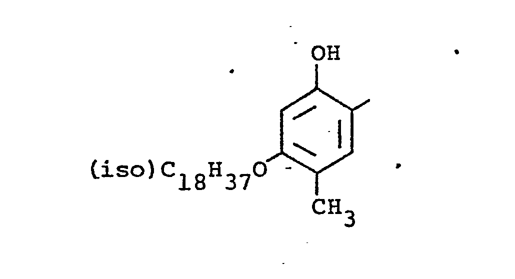

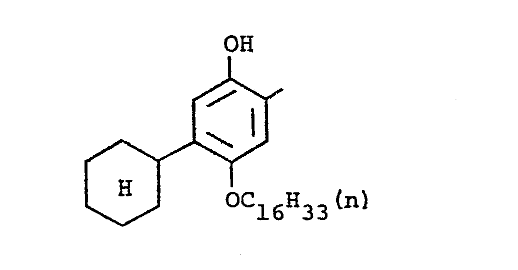

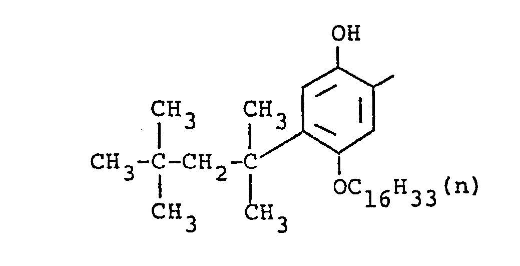

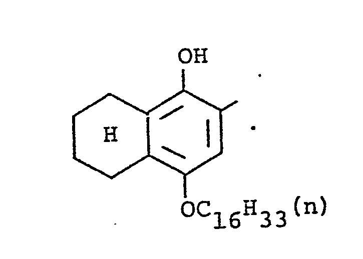

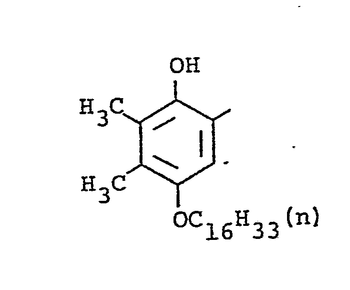

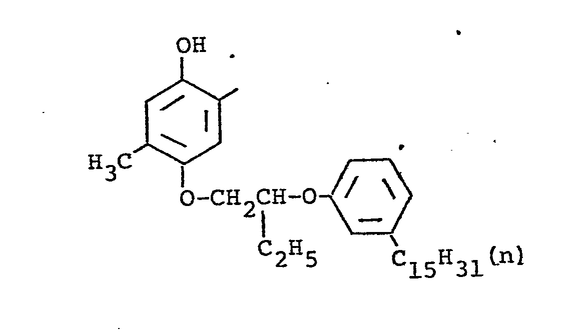

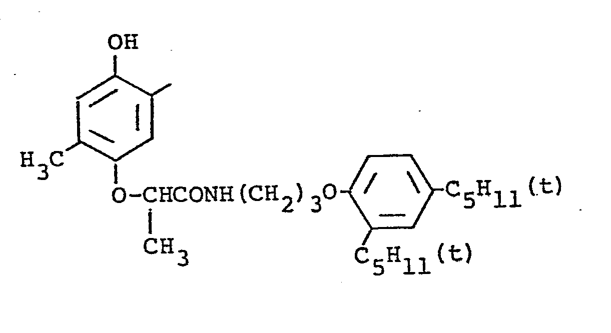

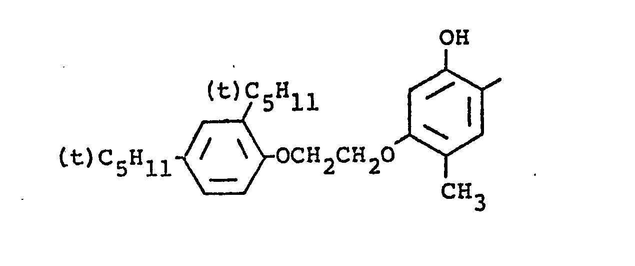

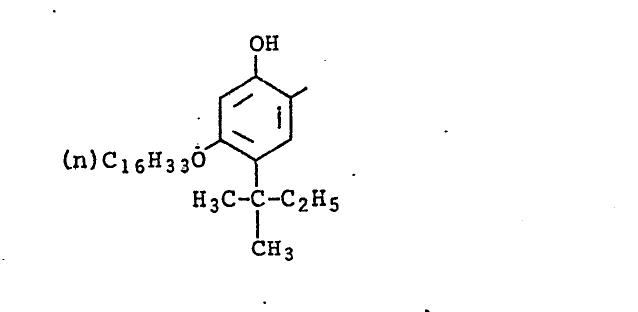

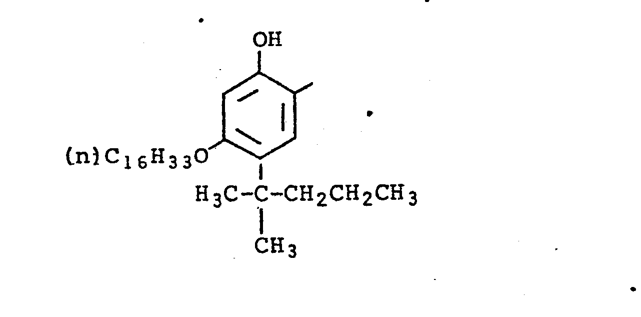

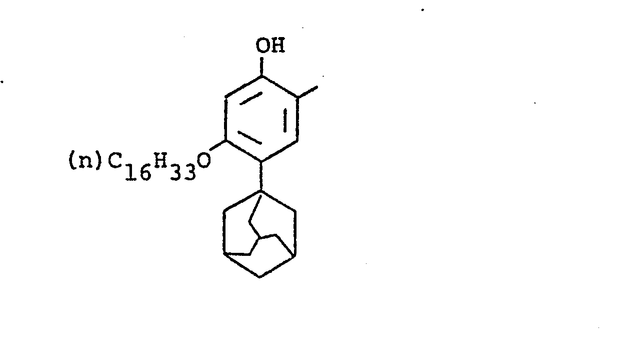

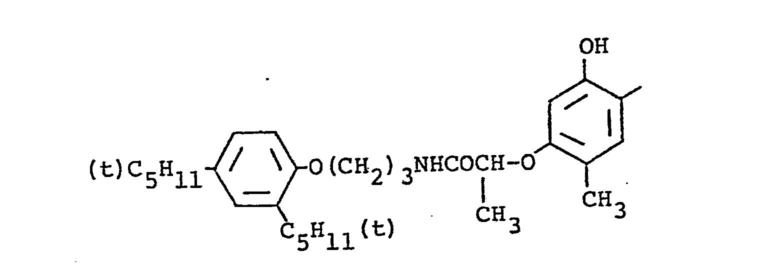

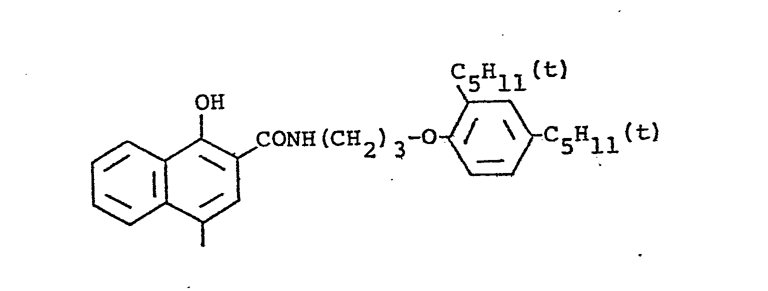

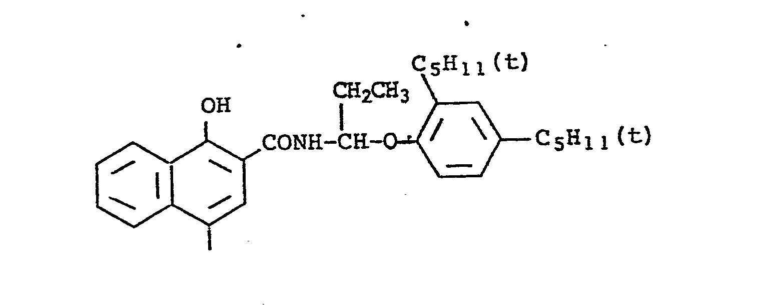

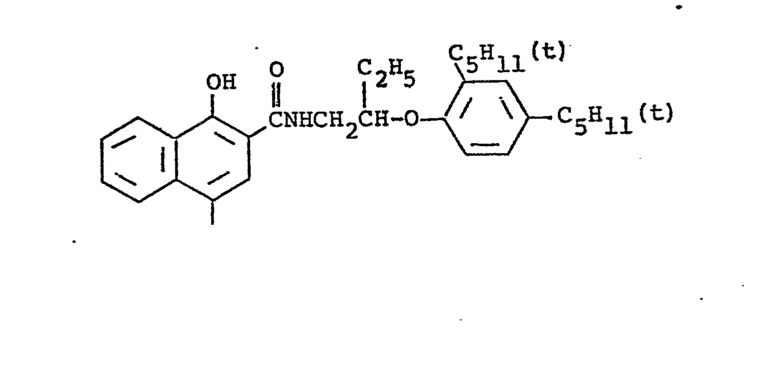

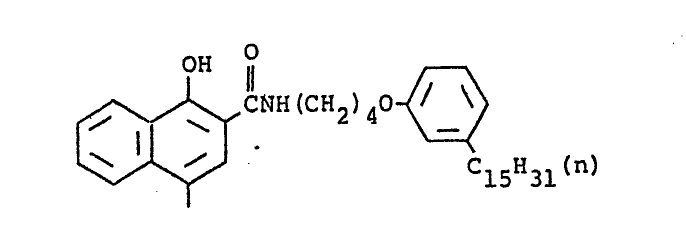

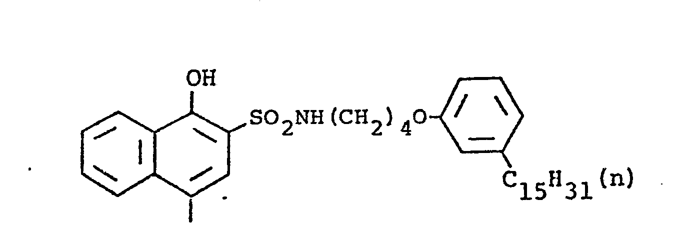

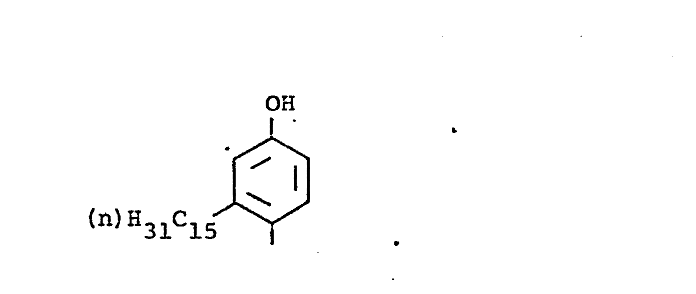

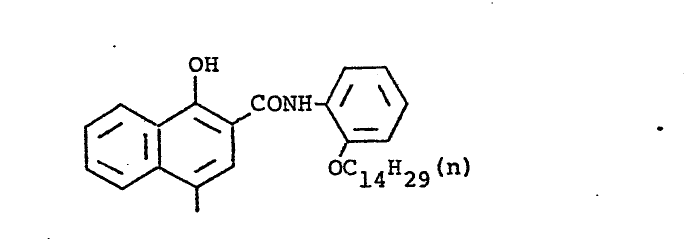

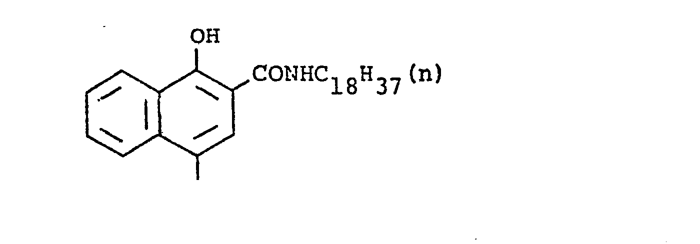

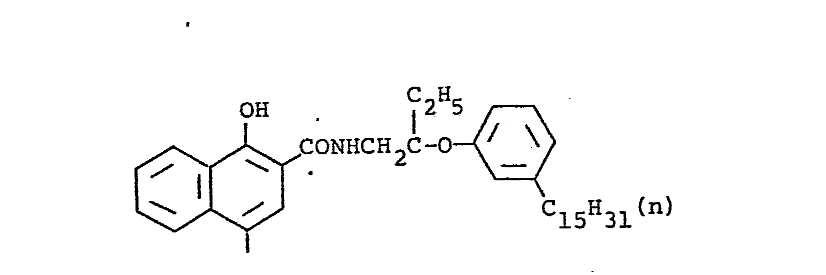

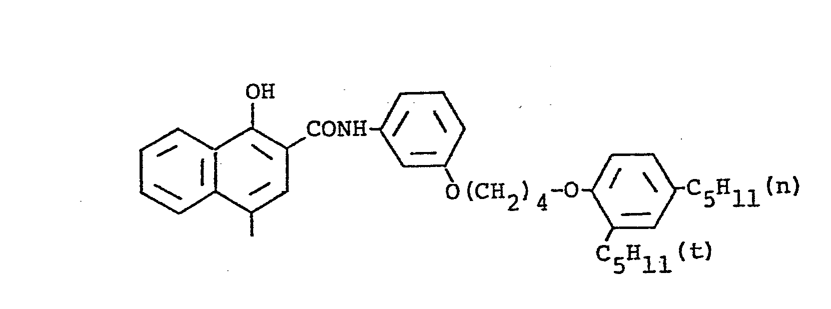

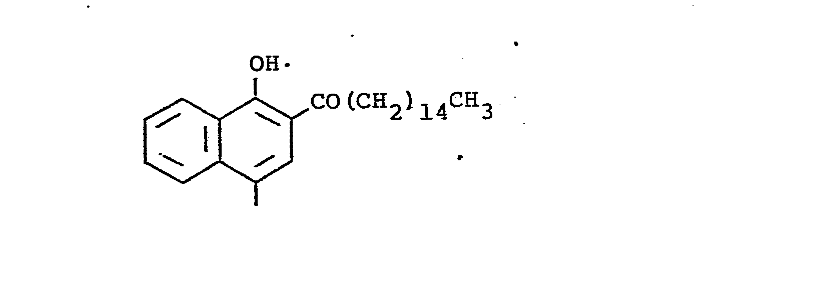

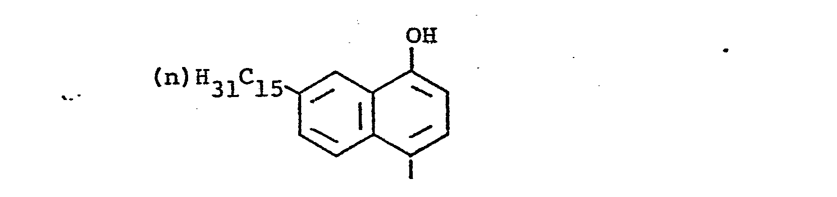

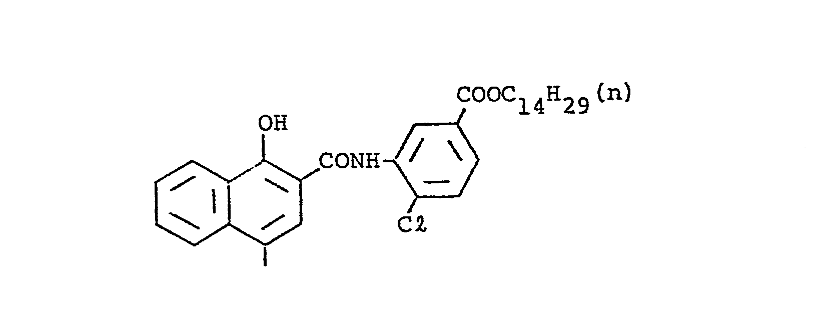

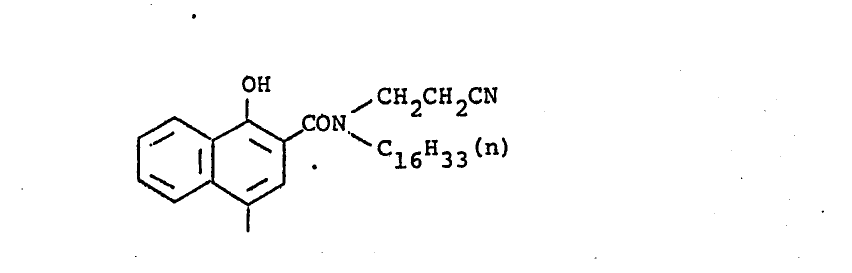

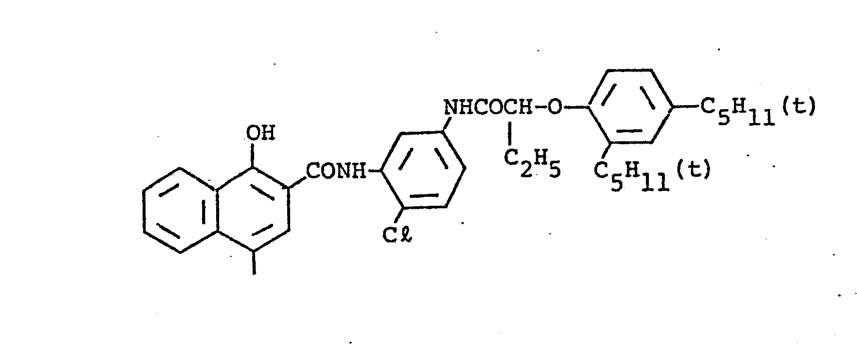

Furthermore, the groups described in U.S. Patent 4,055,428, Japanese Patent Application (OPI) Nos. 12642/81, 16130/81, 16131/81, 650/82 and 4043/82 (the term "OPI" as used herein refers to a "published unexamined Japanese patent application"), U.S. Patents 3,928,312, 4,076,529, 4,135,929, 4,258,120, 4,05.3,312 and 4,198,235, Japanese Patent Application (OPI) No. 46730/78, U.S. Patents 4,273,855 and 4,149,890, U.S. Published Patent Application B 351,673, Research Disclosure, Vol. 130, No. 13024 (February, 1975), etc., are useful as the redox center.

The group represented by Y may contain a ballast group. The ballast group is an organic ballast group capable of rendering the dye releasing redox compound non-diffusible during heat-development and preferably is or contains a hydrophobic group having from 8 to 32 carbon atoms. Such an organic ballast group can be bonded to the dye releasing redox compound directly or through a linking group, for example, an imino bond, an ether bond, a thioether bond, a carbonamido bond, a sulfonamido bond, a-ureido bond, an ester bond, an imido bond, a carbamoyl bond, a sulfamoyl bond, etc., alone or in combination thereof.

Specific examples of ballast groups are illustrated below.

An alkyl group or an alkenyl group (for example, a dodecyl group, an octadecyl group, etc.), an alkoxyalkyl group (for example, a 3-(octyloxy)propyl group, a 3-(2-ethylundecyloxy)^{p}ropyl group, etc., as described in Japanese Patent Publication No. 27563/64, etc.), an alkylaryl group (for example, a 4-nohylphenyl gr^{p}up, a 2,4-di-tert-butylphenyl group, etc.), and alkylaryloxy- alkyl group (for example, a 2,4-di-tert-pentylphenoxy- methyl group, an a-(2,4-di-tert-pentylphenoxy)propyl group, a 1-(3-pentadecylphenoxy)ethyl group, etc.), an acylamidoalkyl group (for example, a group described in U.S. Patents 3,337,344 and 3,418,129, a 2-(N-butylhexa- decanamido)ethyl group, etc.), an alkoxyaryl or aryloxy- aryl group (for example, a 4-(n-octadecyloxy)phenyl group, a 4-(4-n-dodecylphenyloxy)phenyl group, etc.), a residue containing both an alkyl or alkenyl long-chain aliphatic group and a water-solubilizing group such as a carboxy group or a sulfo group (for example, a 1-carboxymethyl-2-nonadecenyl group, a 1-sulfoheptadecyl group, etc.), an alkyl group substituted with an ester group (for example, a 1-ethoxycarbonylheptadecyl group, a 2-(n-dodecyloxycarbonyl)ethyl group, etc.), an alkyl group substituted with an aryl group or a heterocyclic group (for example, a 2-[4-(3-methoxycarbonyluneicosan- amido)phenyl]ethyl group, a 2-[4-(2-n-octadecylsuccin- imido)phenyl]ethyl group, etc.), and an aryl group substituted with an aryloxyalkoxycarbonyl group (for example, a 4-[2-(2,4-di-tert-pentylphenoxy)-2-methyl- propyloxycarbonyllphenyl group, etc.).

Specific examples of dye releasing redox compound according to the present invention are illustrated below. However, the present invention should not be construed as being limited to these specific examples.

### Compound 1

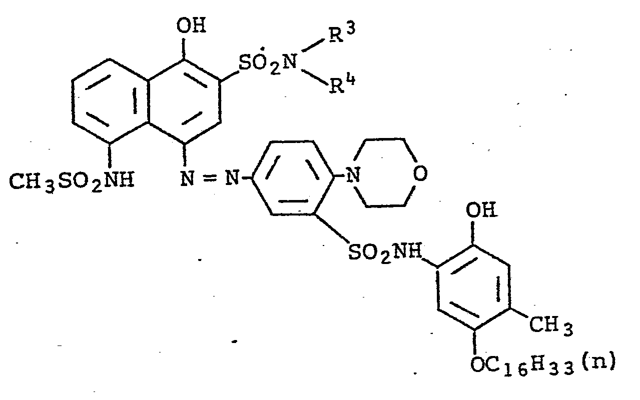

wherein _{R}³ is H and R⁴ is -C(CH₃)₃

### Campound 2

Same compound as Compound 1 except for R³ is H and _{R}⁴ is -C₄H₉(n)

### Compound 3

Same compound as Compound 1 except for R³ and R are -C₂H₅

### Compound 4

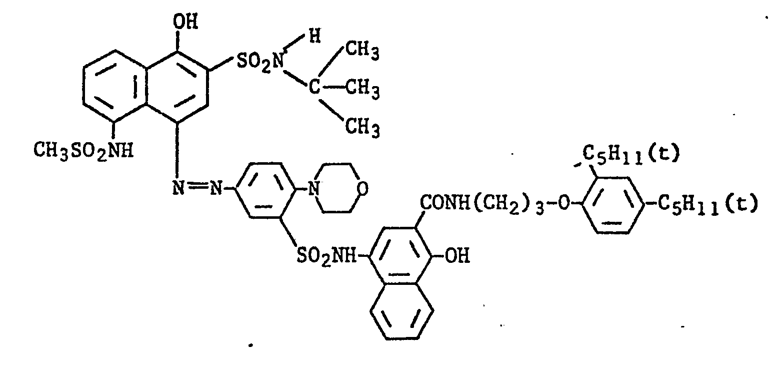

### Compound 5

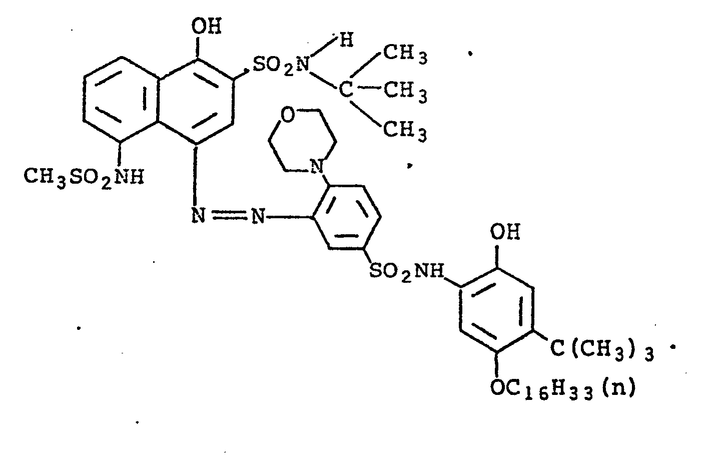

### Compound 6

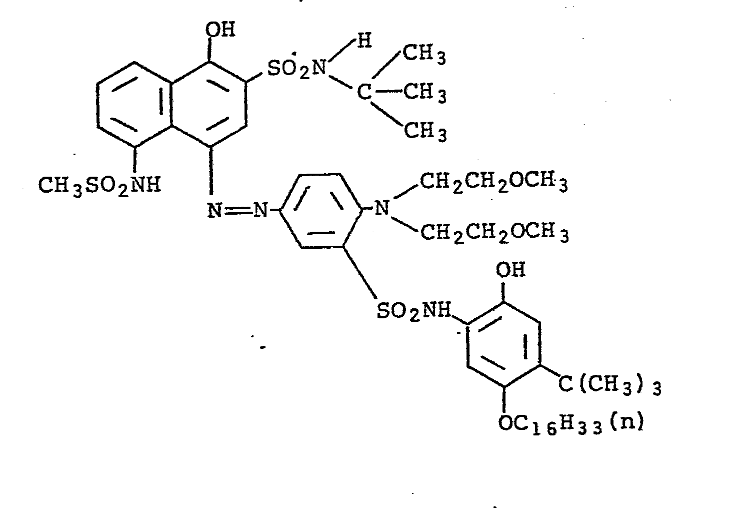

### Compound 7

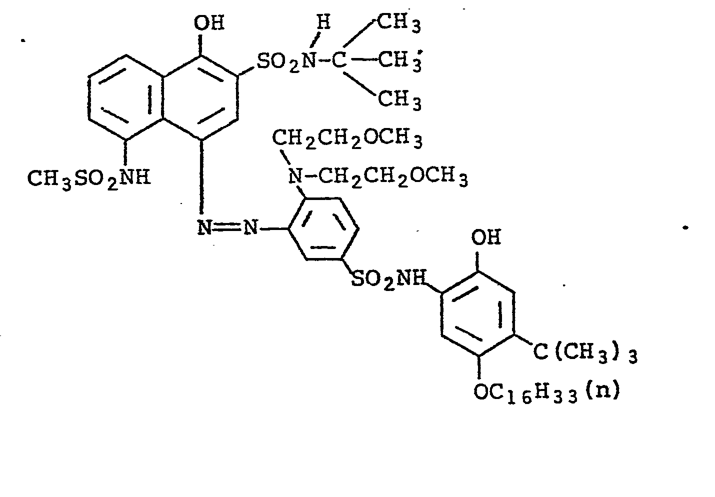

### Compound 8

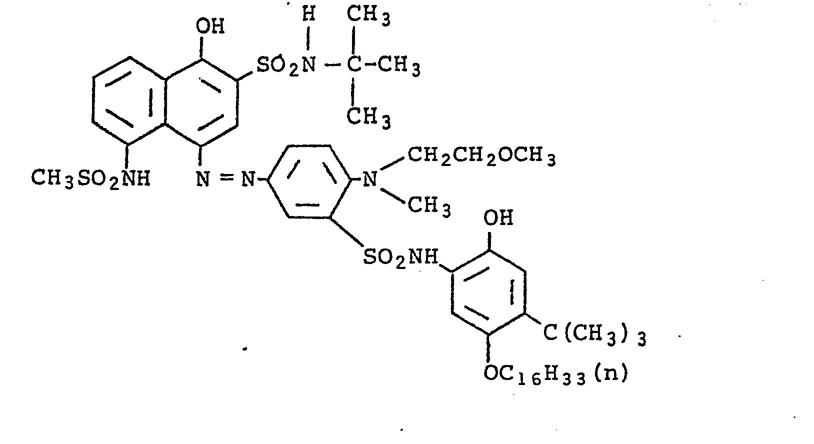

### Compound 9

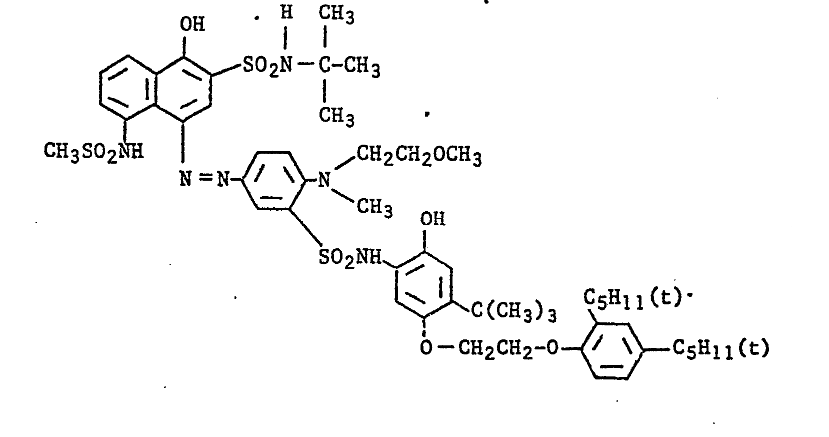

### Compound 10

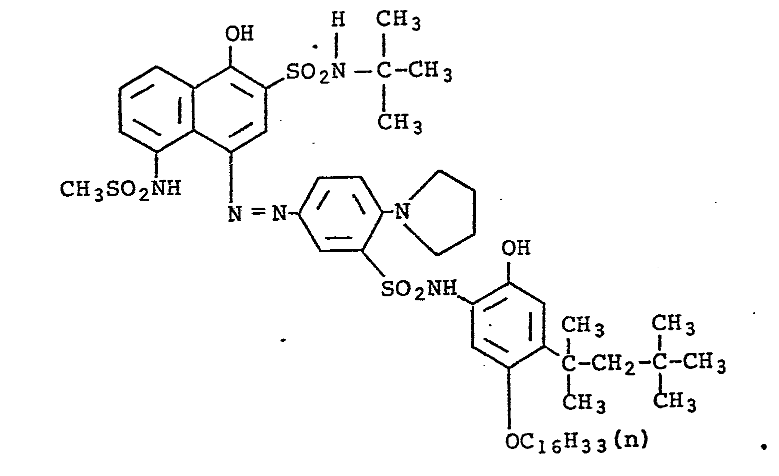

### Compound 11

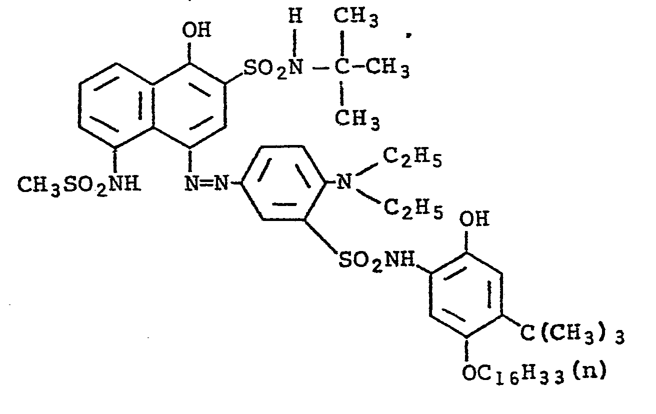

### Compound 12

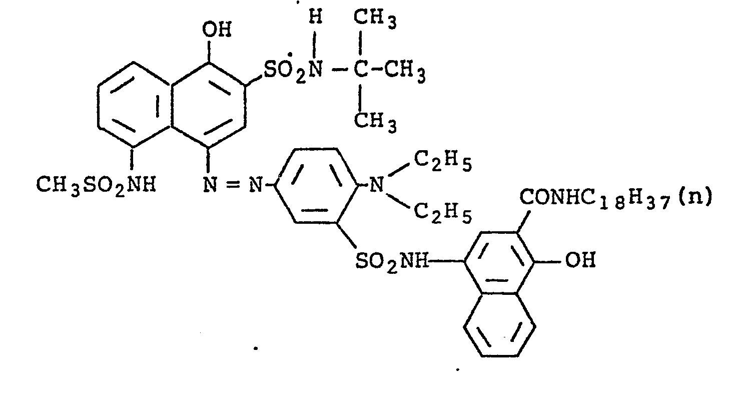

### Compound 13

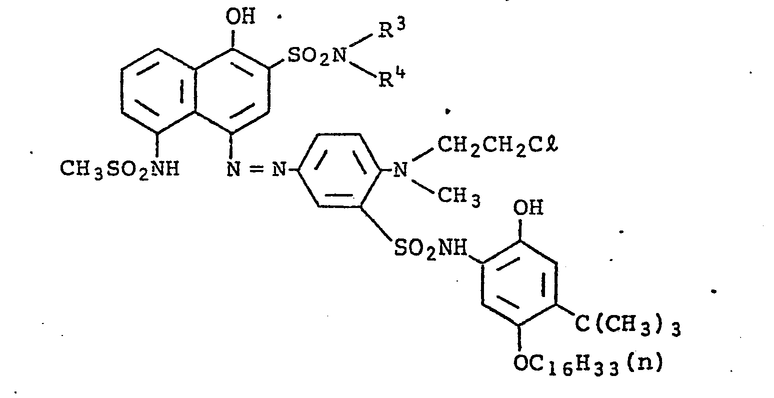

wherein R³ is _{H} and _{R}⁴ is

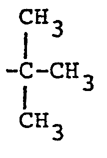

### Compound 14

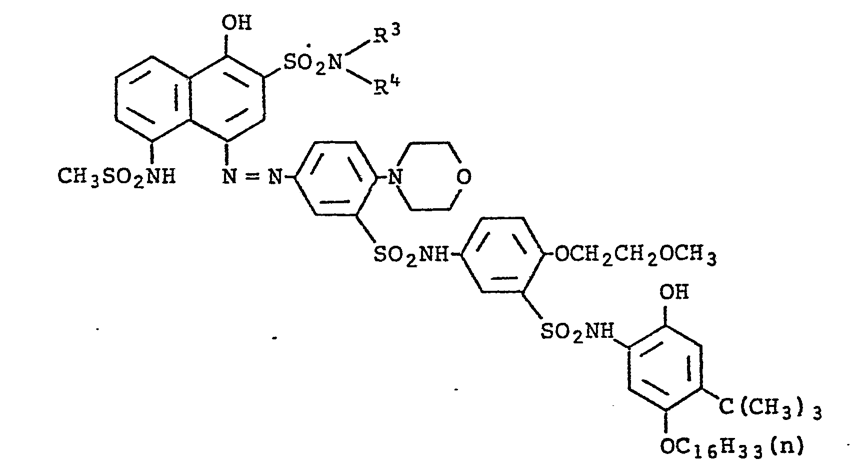

wherein R³ is H and R4 is

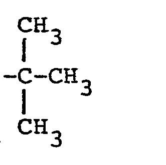

### Compound 15

5 Same compound as Compound 14 except for R³ is H and R⁴ is -C₄H₉(n)

### Compound 16

Same compound as Compound 14 except for _{R}³ and R⁴ are -C₂H₅

### Compound 17

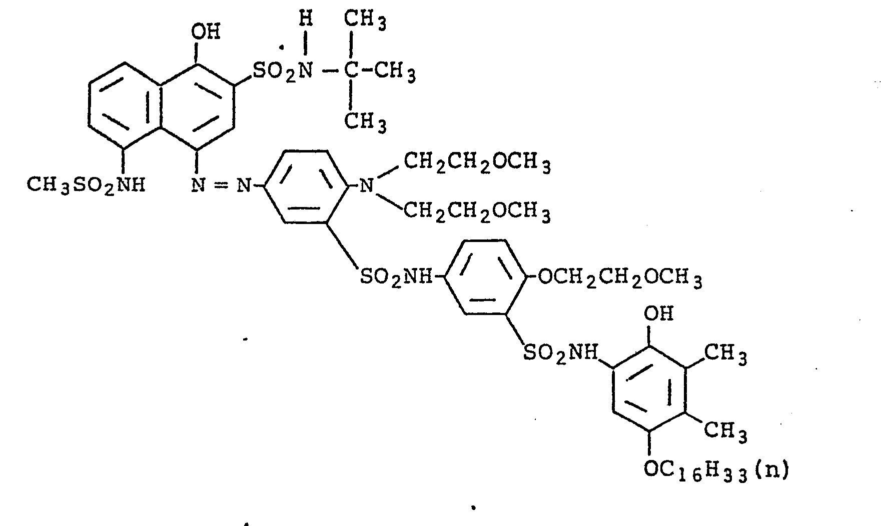

### Compound 18

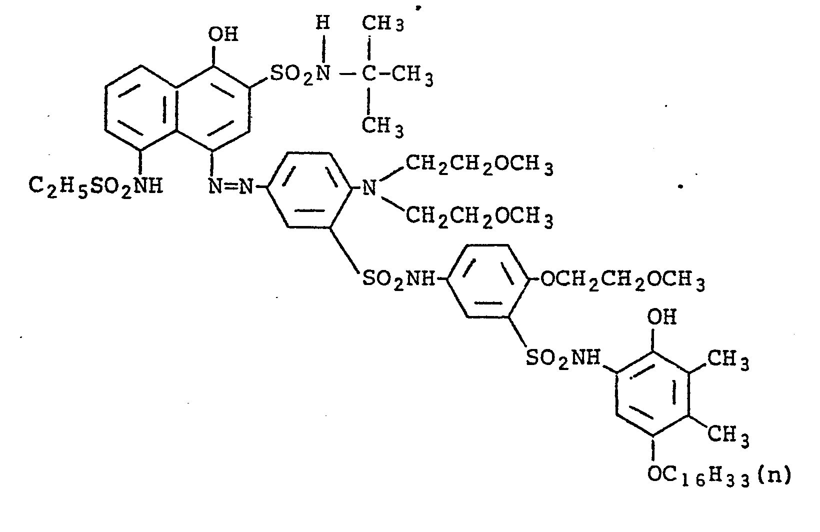

### Compound 19

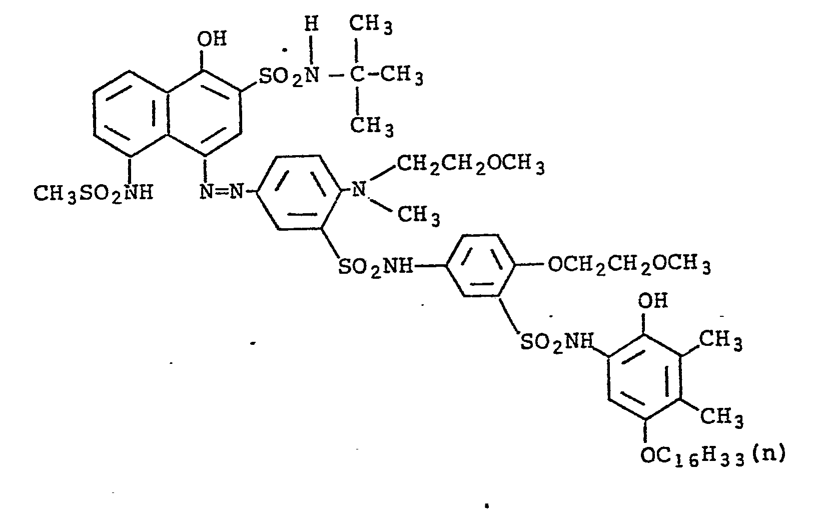

### Compound 20

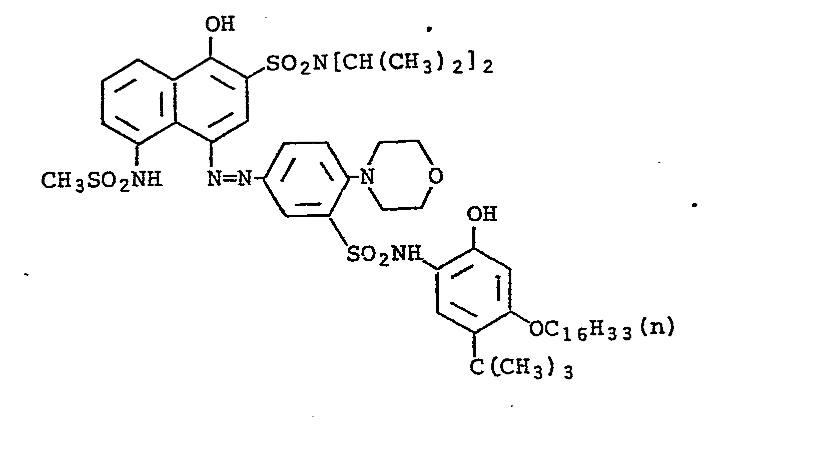

### Compound 21

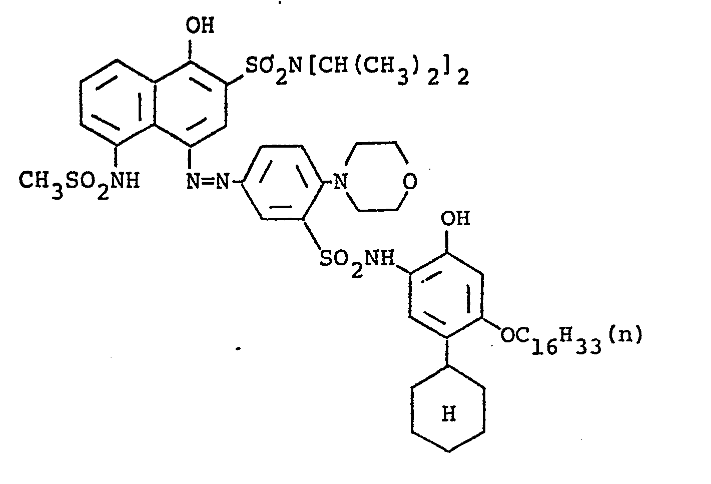

### Compound 22

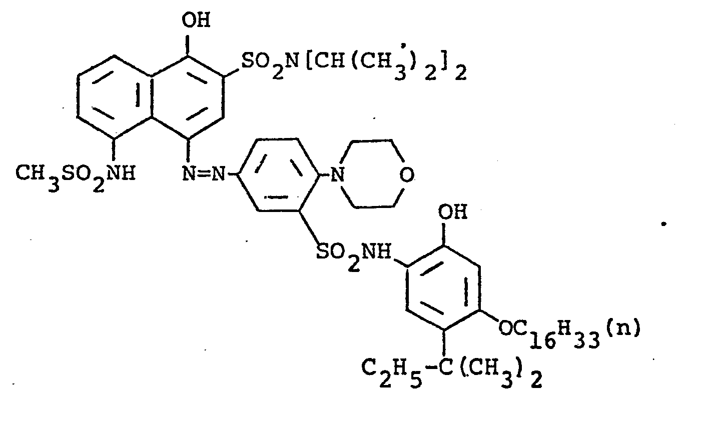

### Compound 23

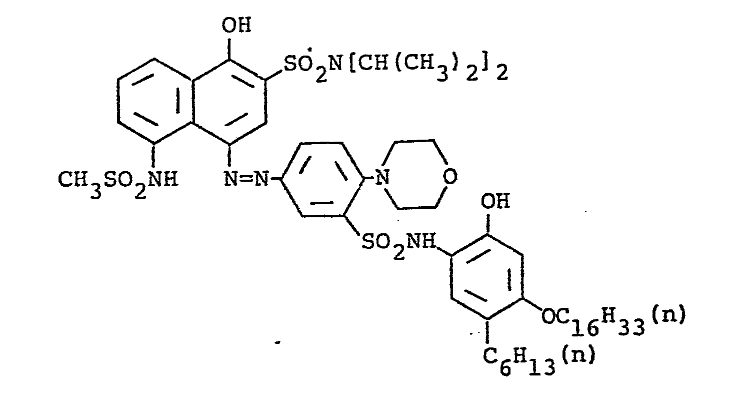

### Compound 24

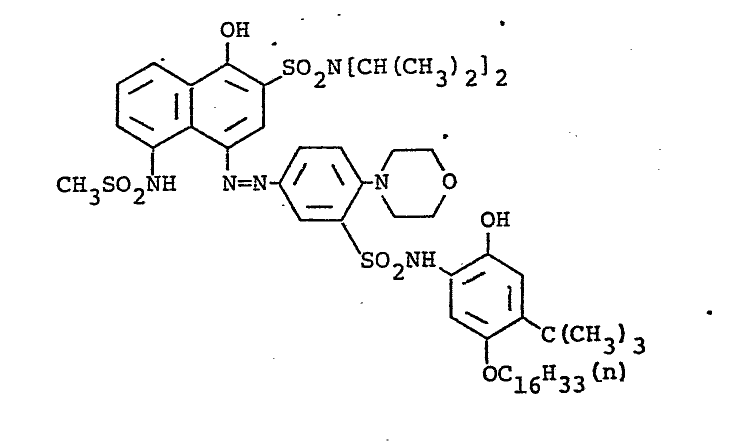

### Compound 25

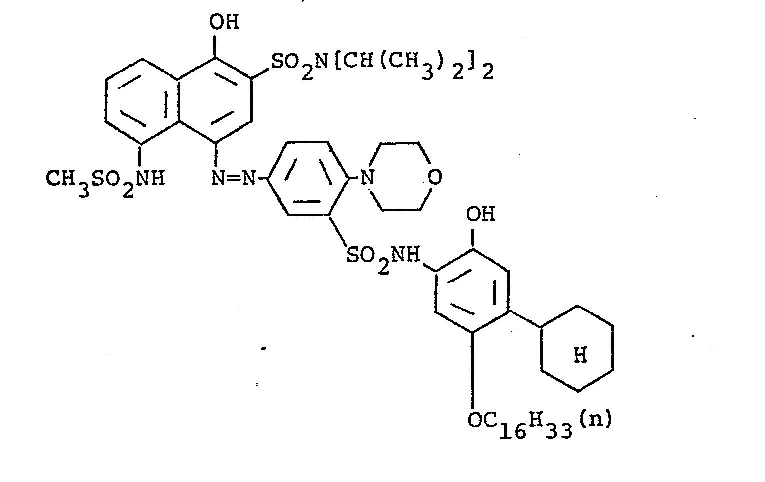

### Compound 26

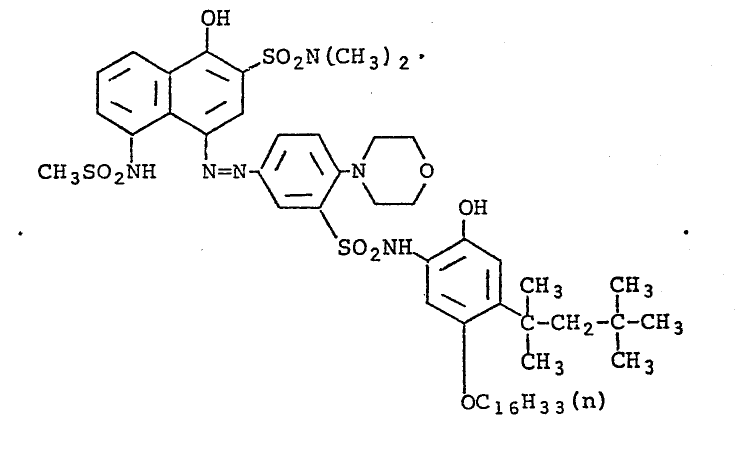

### Compound 27

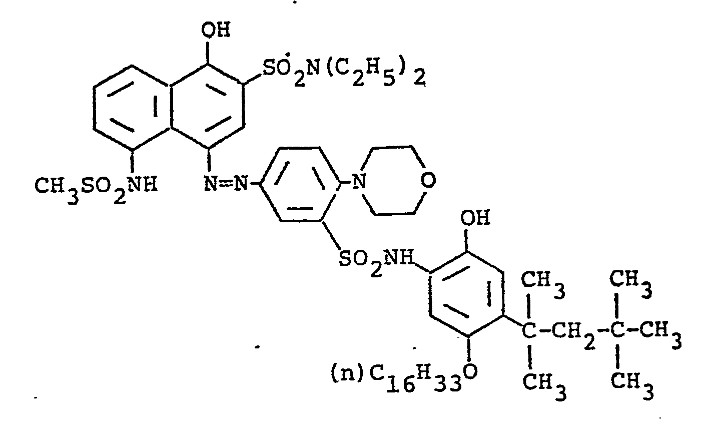

### Compound 28

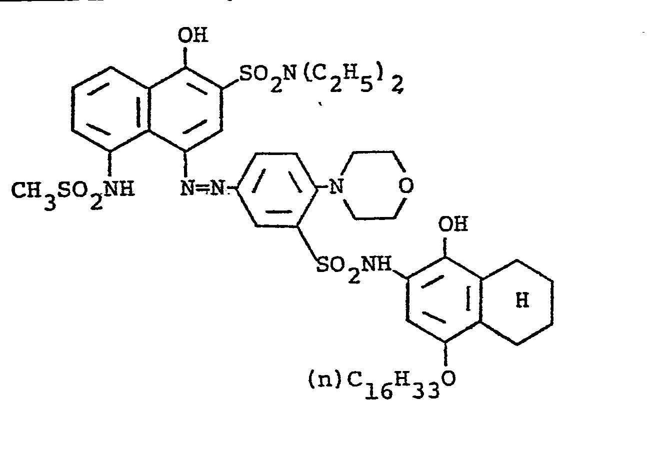

The compound according to the present invention releases a magenta dye compound represented by the following general formula (A): 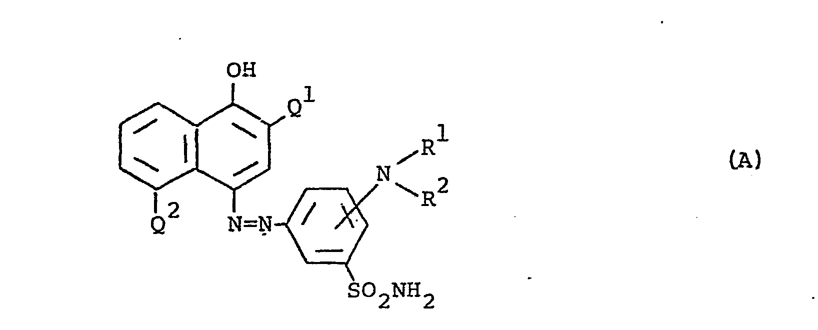 wherein Q¹, _{Q}², _{R}¹ and _{R}² each has'the same meaning as defined in the general formula (Ia) or (Ib) and the group of 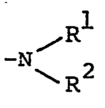 is present at the 2-position or the 4- position, when the compound is oxidized.

The compound according to the present invention can be obtained by a coupling reaction of a compound represented by the formula (B) (the coupler or coupling component) with a diazo compound derived from an amine represented by the formula (C); or by a condensation reaction of a sulfonyl halide represented by the formula (D) with an amine represented by the formula (E): 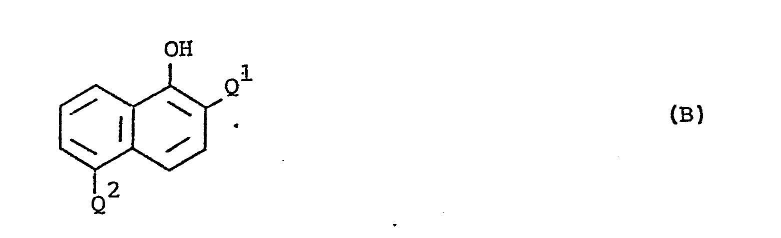 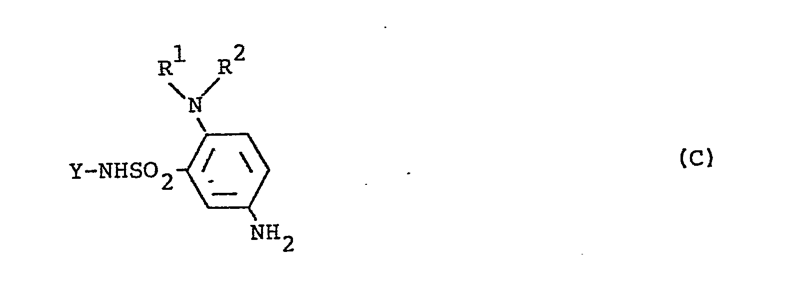 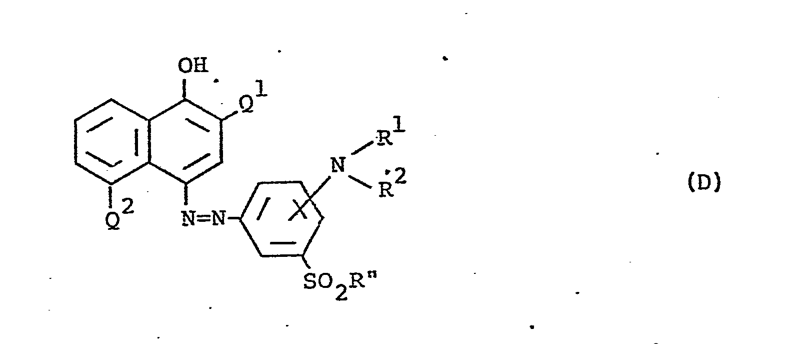 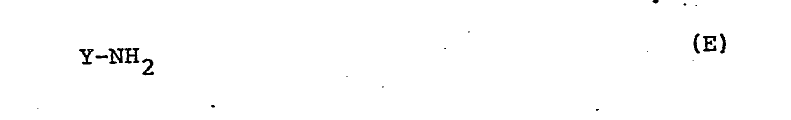 wherein Q¹, Q², R¹, R² and Y each has the same meaning as defined in the general formula (Ia) or (Ib); and R" represents a halogen atom (for example, a chlorine atom, a fluorine atom, etc.).

When the compound according to the present invention is obtained by a coupling reaction of a compound represented by the formula (B) with a diazo compound derived from an amine represented by the formula (C), it is desirable to conduct the diazotization and the coupling reaction at a temperature as low as possible (e.g., about -20°C) in order to prevent oxidation of the redox center.

Typical synthesis examples of the dye releasing redox compounds used in the present invention and intermediate thereof are illustrated in detail below.

### Synthesis of Intermediates

### Synthesis Example 1 of Intermediate:

### Synthesis of Sodium 2-Morpholino-5-nitrdbenzenesulfonate

To 80 mℓ of morpholine, 82.5 g (0.3 mol) of sodium 2-chloro-5-nitrobenzenesulfonate was added with stirring. The reaction mixture was heated at about 110°C on an oil bath with stirring for 30 minutes. After cooling, 100 mt of a saturated aqueous sodium chloride solution was added to the mixture. The crystals thus-precipitated were collected by filtration and washed with acetone to obtain 88 g (yield: 90%) of sodium 2-morpholino-5-nitrobenzenesulfonate. Melting Point: 208-210°C.

### Synthesis Example 2 of Intermediate:

### Synthesis of Sodium 2-[bis(2-methoxyethyl)amino]-5-nitrobenzenesulfonate

To 30 mℓ of 2-methoxyethylamine, 27.5 g (0.1 mol) of sodium 2-chloro-5-nitrobenzenesulfonate was added. The reaction mixture was heated on a steam bath with stirring for 1 hour. After cooling, 100 mℓ of a saturated aqueous sodium chloride solution was added to the mixture. The crystals thus-precipitated were collected by filtration and washed with acetone to obtain about 30 g (yield: 87%) of sodium 2-(2-methoxy- ethylamino)-5-nitrobenzenesulfonate. This compound (30 g) was suspended in 100 mi of dimethylformamide. To the mixture anhydrous potassium carbonate (20 g) and methoxyethyl bromide (21 g) were added, and heated on a steam bath with stirring for 1 hour. The reaction mixture was added to 100 mℓ of water and the inspluble materials were removed by filtration. To the filtrate an aqueous hydrochloric acid was added to render an acid condition. The crystals thus-precipitated were collected by filtration to obtain about 21 g (yield: 60%) of sodium 2-bis(2-methoxyethyl)amino-5-nitrobenzenesulfonate. Melting Point: 202-204°C.

Synthesis of Dye Releasing Redox Compound

### Synthesis Example 1: Synthesis of Compound 1 (a) Synthesis of 2-Morpholino-5-nitrobenzenesulfonyl

### Chloride

31 g (0.1 mol) of sodium 2-morpholino-5-nitrobenzenesulfonate obtained in Synthesis Example 1 of Intermediate described above and 60 mℓ (0.67 mol) of phosphorus oxychloride were added to 300 mℓ of acetonitrile and the mixture was refluxed by heating for 2 hours. After cooling, the reaction mixture was added to 600 mℓ of ice water. The crystals thus-precipitated were collected by filtration. Yield: 18.5 g (60%).

### (b) Synthesis of 2-(2'-Morpholino-5'-nitrobenzene-

### sulfonamido)-4-hexadecyloxy-5-methylphenol

To a solution of N,N-dimethylacetamide (60 mℓ) containing 15.3 g (0.05 mol) of the compound obtained in Step (a) above and 20 g (0.05 mol) of 2-amino-4-hexa- decyloxy-5-methylphenol hydrochloride, 12 mℓ (0.15 mol) of pyridine was added dropwise at below 10°C. After the completion of the addition, the mixture was stirred at room temperature for 1 hour. To the reaction mixture, methanol (200 mt) was added and heated on a water bath. After cooling, the crystals thus-precipitated were collected by filtration. Yield: 31 g (98%).

### (c) Synthesis of 2-(2'-Morpholino-5'-nitrobenzene- sulfonamido)-4-hexadecyloxy-5-methylphenyl acetate

A mixture of 19.5 g (0.03 mol) of the compound octained in Step (b) above, acetic anhydride (10 mℓ), acetic acid (150 mℓ) and sodium acetate (5 g) was heated at about 120°C on an oil bath with stirring for 1 hour. After cooling, the reaction mixture was added to ice water (500 mℓ) and the crystals thus-precipitated were collected by filtration and washed with methanol. Yield: 20 g (96%).

### (d) Synthesis of 2-(2'-Morpholino-5'-aminobenzene- sulfonamido)-4-hexadecyloxy-5-methylphenyl acetate

19.5 g (0.029 mol) of the compound obtained in Step (c) above, reduced iron (5.3 g), triirontetraoxide (2.7 g) and ammonium chloride (.0.4 g) were suspended in isopropanol (300 mt). To the mixture, a mixed solution of water (40 mℓ) and acetic acid (2 mℓ) was added dropwise while refluxing with heating. After the completion of the addition, the mixture was refluxed with heating for 2 hours and the insoluble materials were removed by filtration while hot. The filtrate was added to water (300 mℓ) and the crystals thus-precipitated were collected by filtration. Yield: 16.4 g (86%).

### (e) Synthesis of Acetyl Derivative of Compound 1

10 g (0.0155 mol) of the compound obtained in Step (d) above was added to a mixed solution of methyl Cellosolve (80 mℓ) and concentrated hydrochloric acid (6.3 mℓ) and the mixture was stirred at about 0°C. To the reaction solution, a mixed solution of water (3 mℓ) and methyl Cellosolve (15 mₜ) containing sodium nitrite (1.25 g) was added dropwise while maintaining the temperature of the reaction mixture at 0 to 5°C and further stirred for 1 hour.

The reaction solution of diazonium salt thus- prepared was added to a solution of methyl Cellosolve (55 mt) containing 2-tert-butylsulfamoyl-5-methane- sulfonamido-1-naphthol (5.5 g, 0.0155 mol) and sodium acetate (3.9 g) at about 0°C and stirred for 1 hour. 10 mℓ of concentrated hydrochloric acid was added to the reaction mixture to render an acid condition and the mixture was added to water. The crystals thus-precipitated were collected by filtration and recrystallized from acetonitrile. Yield: 8.5 g (55%).

### (f) Synthesis of Compound 1

8.9 g of the acetyl derivative obtained in Step (e) above was completely dissolved in a solvent mixture of methanol (100 mℓ) and acetonitrile (50 mℓ) and to the solution concentrated hydrochloric acid (20 mℓ) was added. The mixture was refluxed with heating for 2 hours. After cooling to room temperature, the crystals thus-precipitated were collected by filtration, washed with methanol with heating to obtain Compound 1. Yield: 7.2 g (84%). Melting Point: 101-104°C. max = 562 nm (ε = 4.77 × 10⁴) Synthesis Example 2: Synthesis of Compound 20

The same procedure as described in Step (b) of Synthesis Example 1 above was repeated except using 2-amino-4-tert-butyl-5-hexadecyloxyphenol hydrochloride in place of the 2-amino-4-hexadecyloxy-5-methylphenol hydrochloride to obtain 2-(2'-morpholino-5'-nitrobenzene- sulfonamido)-4-tert-butyl-5-hexadecyloxyphenol. The latter compound was acetylated in the same manner as described in Step (c) of Synthesis Example 1 above, reduced in the same manner as described in Step (d) of Synthesis Example 1 above and then subjected to diazotized coupling in the same manner as described in Step (e) of Synthesis Example 1 above except using 2-N,N-diisopropylsulfamoyl-5-methanesulfonamido-1-naphthol in place of the 2-N-tert-butylsulfamoyl-5-methanesulfon- amido-1-naphthol to obtain the acetyl derivative of Compound 20. This compound was hydrolyzed in the same manner as described in Step (f) of Synthesis Example 1 above to obtain Compound 20. Melting Point: 81-85°C. 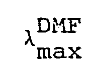 = 568 nm (ε = 4.79 x 10⁴)

### Synthesis Example 3: Synthesis of Compound 21

The same procedure as described in Step (b) of Synthesis Example 1 above was repeated except using 2-amino-4-cyclohexyl-5-hexadecyloxyphenol hydrochloride in place of the 2-amino-4-hexadecyloxy-5-methylphenol hydrochloride to obtain 2-(2'-morpholino-5'-nitrobenzene- sulfonamido)-4-cyclohexyl-5-hexadecyloxyphenol. The latter compound was acetylated in the same manner as described in Step (c) of Synthesis Example 1 above, reduced in the same manner as described in Step (d) of Synthesis Example 1 above and then subjected to diazotized coupling in the same manner as described in Step Ce) of Synthesis Example 1 above except using 2-N,N-diisopropylsulfonyl-5-methanesulfonamido-1-naphthol in place of the 2-N-tert-butylsulfamoyl-5-methanesulfon- amido-1-naphthol to obtain the acetyl derivative of Compound 21. This compound was hydrolyzed in the same manner as described in Step (f) of Synthesis Example 1 above to obtain Compound 21. Melting Point: 98-105°C. 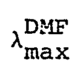 = 568 nm (e = 4.6₉ x ₁₀⁴)

### Synthesis Example 4: Synthesis of Compound 26

The same procedure as described in Step (b) of Synthesis Example 1 above was repeated except using 2-amino-4-hexadecyloxy-5-(1,1,3,3-tetramethylbutyl)phenol p-toluenesulfonate in place of 2-amino-4--hexadecyloxy-5-methylphenol hydrochloride to obtain 2-(2'-morpholino-5'-nitrobenzenesulfonamido)-4-hexadecyloxy-5-(1,1,3,3-tetramethylbutyl)phenol. The latter compound was acetylated in the same manner as described in Step (c) of Synthesis Example 1 above and reduced in the same manner as described in Step (d) of Synthesis Example 1 above to obtain 2-(2'-morpholino-5'-aminobenzenesulfon- aminol-4-hexadecyloxy-5-(1,1,3,3-tetramethylbutyl)phenyl. acetate. Melting Point: 147-148°C.

6.6 g (0.0089 mol) of the compound obtained above was added to a mixed solvent of methyl Cellosolve (100 mℓ), concentrated hydrochloric acid (2.4 mt) and acetic acid (2.4 mℓ) and the mixture was stirred at about 0°C. To the reaction solution, an aqueous solution (1.5 mℓ) containing sodium nitrite (0.62 g) was added dropwise while maintaining the temperature of the reaction mixture at 0 to 5°C and further stirred for.l hour.

The reaction solution of diazonium salt thus- prepared was added to a solution of methyl Cellosolve (80 mt) containing 2-(N,N-dimethylsu1famoyl)-5-methane- sulfonamido-l-naphthol (3.05 g, 0.0089 mol) and sodium acetate (7 g) at 0°C and stirred for 1 hour. 10 mℓof concentrated hydrochloric acid was added to the reaction mixture to render an acid condition and the mixture was added to water. The crystals thus-precipitated were collected by filtration, washed with water and dried to obtain 9.3 g of the crude crystals of the acetyl derivative of Compound 26. Yield: 95%.

This compound was used in the next step without further purification.

9.3 g (0.0085 mol) of the crude acetyl derivative obtained above was dissolved in N,N-dimethylacetamide (150 mℓ) and the solution was stirred while introducing a nitrogen gas. To the solution was added a methanol solution (10 mℓ) of potassium hydroxide (1.4 g) and the mixture was stirred at room temperature for 30 minutes. The reaction mixture was added to 500 mℓ of 0.2 N aqueous hydrochloric acid and the crystals thus-precipitated were extracted with ethyl acetate. The ethyl acetate was concentrated and the residue was purified using flush column chromatography (adsorbent: Kieselgel 60 Art 9385 manufactured by Merk Co.; eluate: ethyl acetate/n-hexane = 3/1) to obtain Compound 26. Yield: 5.6 g (63%). Melting Point: 126-132°C. 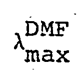 = 561 nm (ε = 4.54 x ₁₀⁴)

### Synthesis Example 5: Synthesis of Compound 27

The same diazotized coupling as described in Synthesis Example 4 was repeated except using 2-(2'-morpholino-5'-aminobenzenesulfonamido)-4-hexadecyloxy-5-(1,1,3,3-tetramethylbutyl)phenyl acetate obtained for the reaction intermediate as a diazo component and 2-(N,N-diethylsulfamoyl)-5--methanesulfonamido-l-naphthol in place of the 2-(N,N-dinethylsulfamoyl)-5-methane- sulfonamido-1-naphthol as a coupler component to obtain the crude crystals of the acetylated derivative of Compound 27. The compound was hydrolyzed with alkali and purified using flush column chromatography in the same manner as described in Synthesis Example 4 above to obtain Compound 27. Melting Point: 118-124°C. 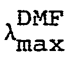 = 564 nm (ε = 4.6₂ x 10⁴)

The dye releasing redox compound which releases a diffusible dye according to the present invention can be used in an amount of a fixed range. Generally, a suitable range is about 0.01 mol to about 4 mols of the dye releasing redox compound per mol of the silver halide. A particularly suitable amount in.the present invention is in a range of about 0.03 to about 1 mol per mol of the silver halide.

In the present invention, if necessary, a reducing agent may be used. The reducing agent in this case is the so-called auxiliary developing agent, which is oxidized by the silver halide to form its oxidized product having an ability to oxidize the reducing group Y in the dye releasing redox compound.

Examples of useful auxiliary developing agents include hydroquinone, alkyl substituted hydroquinones such as tertiary butyl hydroquinone or 2,5-dimethylhydroquinone, catechols, pyrogallols, halogen substituted hydroquinones such as chlorohydroquinone or dichlorohydroquinone, alkoxy substituted hydroquinones such as methoxyhydroquinone, polyhydroxybenzene derivatives such as methyl hydroxynaphthalene, etc. Further, there are methyl gallate, ascorbic acid, ascorbic acid derivatives, hydroxylamines such as N,N-di(2-ethoxyethyl)-hydroxylamine, etc., pyrazolidones such as I-phenyl-3-pyrazolidone or 4-methyl-4-hydroxymethyl-1-phenyl-3-pyrazolidone, etc., reductones and hydroxy tetronic acids.

The auxiliary developing agent can be used in an amount of a fixed range. A suitable range is 0.01 time by mol to 20 times by mol based on the silver halide. A particularly suitable range is 0.1 time by mol to 4 times by mol.

Examples of the silver halide used in the present invention include silver chloride, silver chlorobromide, silver chloroiodide, silver bromide, silver iodobromide, silver chloroiodobromide and silver iodide, etc.

Particularly preferred examples of silver halide used in the present invention partially contain a silver iodide crystal in its particle. That is, the silver halides the X-ray diffraction pattern of which shows that of pure silver iodide are particularly preferred.

The photographic materials comprise a silver halide containing at least two silver halides each having different halogen. Such silver halides yield a completely mixed crystal in a conventional silver halide emulsion. For example, the particle of silver iodobromide shows X-ray diffraction pattern at a position corresponding to the mixed ratio of silver iodide crystal and silver bromide crystal but not at a position corresponding to pure silver iodide crystal and pure silver bromide crystal separately.

Particularly preferred examples of silver halide used in the present invention include silver chloroiodide, silver iodobromide, and silver chloroiodobromide each containing silver iodide crystal in its particle.

The process for preparing those silver halides is explained taking the case of silver iodobromide. That is, the silver iodobromide is prepared by adding silver nitride solution to potassium bromide solution to form silver bromide and further adding potassium iodide to the mixing solution.

The silver halide has a particle size of from 0.001 µm to 2 µm and preferably from 0.001 µm to 1 µm.

The silver halide used in the present invention may be used as is. However, it may be chemically sensitized with a chemical sensitizing agent such as compounds of sulfur, selenium or tellurium, etc., or compounds of gold, platinum, palladium, rhodium or iridium, etc., a reducing agent such as tin halide, etc., or a combination thereof. The details thereof are described in T.H. James, The Theory of the Photographic Process, the Fourth Edition, Chapter 5, pages 149 to 169.

Both the silver halide and the dye releasing redox compound may be incorporated into single layer, as well as the silver halide may be incorporated into one layer and the dye releasing redox compound may be incorporated into another layer coated under that layer.

A suitable coating amount of the light-sensitive silver halide used in the present invention is in a total of from 50 mg to 10 g/m² calculated as an amount of silver.

When an organic silver salt oxidizing agent is used together in the practice of the present invention, the sensitivity can be increased and the heat-development time can be shortened.

The organic silver salt oxidizing agent which can be used in the present invention is a silver salt which is comparatively stable to light and which forms a silver image by reacting with the above-described image forming compound or a reducing agent coexisting, if necessary, with the image forming compound, when it is heated to a temperature of above 80°C and, preferably, above 100°C in the presence of exposed silver halide.

Examples of these organic silver salt oxidizing agents include the following compounds.

A silver salt of an organic compound having a carboxy group. Typical examples thereof include a silver salt of an aliphatic carboxylic acid and a silver salt of an aromatic carboxylic acid.

Examples of the silver salts of aliphatic carboxylic acids include silver behenate, silver stearate, silver oleate, silver laurate, silver caprate, silver myristate, silver palmitate, silver maleate, silver fumarate, silver tartarate, silver furoate, silver linolate, silver oleate, silver adipate, silver sebacate, silver succinate, silver acetate, silver butyrate and silver camphorate, etc. These silver salts which are substituted with a halogen atom or a hydroxyl group are also effectively used.

Examples of the silver salts of aromatic carboxylic acid and other carboxyl group containing compounds include silver benzoate, a silver substituted benzoate such as silver 3,5-dihydroxybenzoate, silver o-methylbenzoate, silver m-methylbenzoate, silver p-methylbenzoate, silver 2,4-dichlorobenzoate, silver acetamido- benzoate, silver p-phenylbenzoate, etc., silver gallate, silver tannate, silver phthalate, silver terephthalate, silver salicylate, silver phenylacetate, silver pyromellitate, a silver salt of 3-carboxymethyl-4-methyl-4-thiazoline-2-thione or the like as described in U.S. Patent 3,785,830, and a silver salt of an aliphatic carboxylic acid containing a thioether group as described in U.S. Patent 3,330,663, etc.

In addition, a silver salt of a compound containing a mercapto group or a thione group and a derivative thereof can be used.

Examples of these compounds include a silver salt of 3-mercapto-4-phenyl-1,2,4-triazole, a silver salt of 2-mercaptobenzimidazole, a silver salt of 2-mercapto-5-aminothiadiazole, a silver salt of 2-merca^{p}to- benzothiazole, a silver salt of 2-(S-ethylglycolamido)-benzothiazole, a silver salt of thioglycolic acid such as a silver salt of an S-alkyl thioglycolic acid (wherein the alkyl group has from 12 to 22 carbon atoms) as described in Japanese Patent Application (OPI) No. 28221/73, etc., a silver salt of dithiocarboxylic acid such as a silver salt of dithioacetic acid, etc., a silver salt of thioamide, a silver salt of 5-carboxyl- l-methyl-2-phenyl-4-thiopyridine, a silver salt of mercaptotriazine, a silver salt of 2-mercaptobenzoxazole, a silver salt of mercaptooxadiazole, a silver salt as described in U.S. Patent 4,123,274, for example, a silver salt of 1,2,4-mercaptotriazole derivative such as a silver salt of 3-amino-5-benzylthio-l,2,4-triazole, a silver salt of thione compound such as a silver salt of 3-(2-carboxyethyl)-4-methyl-4-thiazoline-2-thione as described in U.S. Patent 3,301,678, etc., and the like.

Further, a silver salt of a compound containing an imino group can be used. Examples of these compounds include a silver salt of benzotriazole and a derivative thereof as described in Japanese Patent Publication Nos. 30270/69 and 18416/70, for example, a silver salt of benzotriazole, a silver salt of alkyl substituted benzotriazole such as a silver salt of methylbenzotriazole, etc., a silver salt of a halogen substituted benzotriazole such as a silver salt of 5-chlorobenzotriazole, etc., a silver salt of carboimidobenzotriazole such as a silver salt of butylcarboimidobenzotriazole, etc., a silver salt of 1,2,4-triazole or I-H-tetrazole as described in U.S. Patent 4,220,709, a silver salt of carbazole, a silver salt of saccharin, a silver salt of imidazole and an imidazole derivative, and the like.

Moreover, a silver salt as described in Research Disclosure, Vol. 170, No. 17029 (June, 1978) and an organic metal salt such as copper stearate, etc., are examples of the organic metal salt oxidizing agent capable of being used in the present invention.

The mechanism of the heat-development process under heating in the present invention is not entirely clear, but it is believed to be as follows.

When the photographic material is exposed to light, a latent image is formed in a light-sensitive silver halide. This phenomenon is described in T.H. James, The Theory of the Photographic Process, Third Edition, pages 105 to 148.

When the photographic material is heated, the reducing agent, the dye releasing redox compound, in the case of the present invention reduces the silver halide or the silver halide and the organic silver salt oxidizing agent in the presence of the latent image nuclei as a catalyst with the assistance of an alkali agent released by heating to form metallic silver, while it is oxidized itself. The oxidized product of the dye releasing redox compound is attacked by a nucleophilic agent (a dye releasing activator in the case of the present invention) to release a dye.

When the organic silver salt oxidizing agent is used, the silver halide and the organic silver salt oxidizing agent which form a starting point of development should be present within a substantially effective distance.

For this purpose, it is desired that the silver halide and the organic silver salt oxidizing agent are present in the same layer.

The silver halide and the organic metal salt oxidizing agent which are separately formed can be mixed prior to use to prepare a coating solution, but it is also effective to blend both of them in a ball mill for a long period of time. Further, it is effective to use a process which comprises adding a halogen containing compound to the organic silver salt oxidizing agent prepared to form silver halide using silver of the organic silver salt oxidizing agent.

Methods of preparing these silver halide and organic silver salt oxidizing agents and manners of blending them are described in Research Disclosure, No. 17029, Japanese Patent Application (OPI) Nos. 32928/75 and 42529/76, U.S. Patent 3,700,458, and Japanese Patent Application (OPI) -Nos. 13224/74 and 17216/75.

The organic silver salt oxidizing agent used, if necessary, in the present invention is suitably contained in an amount in the range of from 0_{.}1 mol to 200 mols per mol of the silver halide.

A suitable coating amount of the light-sensitive silver halide and the organic silver salt oxidizing agent employed in the present invention is in a total of from 50 mg to 10 g/m² calculated as an amount of silver.

The light-sensitive silver halide and the organic silver salt oxidizing agent used in the present invention are prepared in the binder as described below. Further, the dye releasing redox compound is dispersed in the binder described below.

The binder which can be used in the present invention can be employed individually or in a combination of two or more. A hydrophilic binder can be used as the binder according to the present invention. The typical hydrophilic binder is a transparent or translucent hydrophilic colloid, examples of which include a natural substance, for example, protein such as gelatin, a gelatin derivative, a cellulose derivative, etc., a polysaccharide such as starch, gum arabic, etc., and a synthetic polymer, for example, a water-soluble polyvinyl compound such as polyvinyl pyrrolidone, acrylamide polymer, etc. Another example of the synthetic polymer compound is a dispersed vinyl compound in a latex form which is used for the purpose of increasing dimensional stability of a photographic material.

In the heat-developable color photographic material of the present invention, various kinds of dye releasing activators may be used. The dye releasing activator means a substance which attacks nucleophilically the dye releasing redox compound oxidized by the silver halide or the organic silver salt oxidizing agent to release a diffusible dye, and bases, base releasing agents and water releasing compounds are used. In these dye releasing activators, the bases and the base releasing agents are particularly preferred because they not only accelerate release of the dye but also accelerate the oxidation-reduction reaction between the silver halide or the organic silver salt oxidizing agent and the dye releasing redox compound.

Examples of preferred bases are amines which include trialkylamines, hydroxylamines, aliphatic polyamines, N-alkyl substituted aromatic amines, N-hydroxyalkyl substituted aromatic amines and bis[p-(dialkyl- amino)phenyl]methanes. Further, there are betaine tetramethylammonium iodide and diaminobutane dihydrochloride as described in U.S. Patent 2,410,644, and urea and organic compounds including amino acids such as 6-aminocaproic acid as described in U.S. Patent 3,506,444. The base releasing agent is a substance which releases a basic component by heating. Examples of typical base releasing agents have been described in British Patent 998,949. A preferred base releasing agent is a salt of a carboxylic acid and an organic base, and examples of the suitable carboxylic acid include trichloroacetic acid and trifluoroacetic acid and examples of the suitable base include guanidine, piperidine, morpholine, p-toluidine and 2-picoline, etc. Guanidine trichloroacetate as described in U.S. Patent 3,220,846 is particularly preferred. Further, aldonic amides as described in Japanese Patent Application (OPI) No. 22625/75 are suitably used because they decompose at a high temperature to form a base.

The water releasing compound means a compound which releases water by decomposition during heat-development to convert into a compound having a vapor pressure of 10⁻⁵ Torrs or more at a temperature of 100 to 200°C. These compounds are known in the field of printing of fabrics, and NH₄Fe(SO₄)₂·12H₂O, etc., as described in Japanese Patent Application (OPI) No. 88386/75 are useful.

These dye releasing activator can be used in an amount of a broad range. It is preferably used in an amount in the range of 1/100 to 10 times and, preferably, 1/20 to 2 times by molar ratio based on silver.

Further, in the heat-developable color photographic material of the present invention, it is possible to use compounds which activate development and simultaneously stabilize the images. Particularly, it is suitable to use isothiuroniums including 2-hydroxyethyl- isothiuronium trichloroacetate as described in U.S. Patent 3,301,678, bisisothiuroniums including 1,8-(3,6-dioxaoctane)-bis(isothiuronium trifluoroacetate), etc., as described in U.S. Patent 3;669,670, thiol compounds as described in German Patent Application (OLS) No. 2,162,714, thiazolium compounds such as 2-amino-2-thiazolium trichloroacetate, 2-amino-5-bromoethyl-2-thiazolium trichloroacetate, etc., as described in U.S. Patent 4,012,260, compounds having a-sulfonylacetate as an acid part such as bis(2-amino-2-thiazolium)methylene- bis(sulfonylacetate), 2-amino-2-thiazolium phenyl- sulfonylacetate, etc., as described in U.S. Patent 4,060,420, and compounds having 2-carboxycarboxamide as an acid part as described in U._{S}. Patent 4,088,496.

These compounds or mixtures thereof can be used in a wide range of amounts. It is preferable to use them in a range of 1/100 to 10 times and, preferably, 1/20 to 2 times by molar ratio based on silver.

In the heat-developable color photographic material of the present invention, it is possible to use a thermal solvent. The term "thermal solvent" means a non-hydrolyzable organic material which is solid at an ambient temperature but melts together with other components at a temperature of heat treatment or below. Preferred examples of thermal solvents include compounds which can act as a solvent for the developing agent and compounds having a high dielectric constant which accelerate physical development of silver salts. Examples of preferred thermal solvents include polyglycols as described in U.S. Patent 3,347,675, for example, polyethylene glycol having an average molecular weight of 1,500 to 20,000, derivatives of polyethylene oxide such as oleic acid ester, etc., beeswax, mono- stearin, compounds having a high dielectric constant which have -S0₂- or -CO- such as acetamide, succinimide, ethylcarbamate, urea, methylsulfonamide, ethylene carbonate, etc., polar substances as described in U.S. Patent 3,667,959, lactone of 4-hydroxybutanoic acid, methylsulfinylmethane, tetrahydrothiophene-1,1-dioxide, and 1,10-decanediol, methyl anisate and biphenyl suberate as described in Research Disclosure, pages 26 to 28 (Dec., 1976), etc.

In the present invention, though it is not necessary to incorporate substances or dyes for preventing irradiation or halation in the photographic material, because the photographic material is colored by the dye releasing redox compound, it is possible to add filter dyes or light absorbent materials, etc., as described in Japanese Patent Publication No. 3692/73, U.S. Patents 3,253,921, 2,527,583 and 2,956,879, etc., in order to. further improve sharpness. It is preferred that these dyes have a thermal bleaching property. For example, dyes as described in U.S. Patents 3,769,019, 3,745,009 and 3,615,432 are preferred.

The photographic material according to the present invention may contain, if necessary, various additives known for the heat-developable photographic materials and may have a layer other than the light-sensitive layer, for example, an antistatic layer, an electrically conductive layer, a protective layer, an intermediate layer, an antihalation layer and a strippable layer, etc. Examples of additives include those described in Research Disclosure, Vol. 170, No. 17029 (June, 1978), for example, plasticizers, dyes for improving sharpness, antihalation dyes, sensitizing dyes, matting agents, surface active agents, fluorescent whitening agents and fading preventing agents, etc.

The protective layer, the intermediate layer, the subbing layer, the back layer and other layers can be produced by preparing each coating solution and applying to a support by various coating methods such as a dip coating method, an air knife coating method, a curtain coating method or a hopper coating method as described in U.S. Patents 3,681,294 and drying in a similar manner to preparing the heat-developable photographic layer of the present invention, by which the photographic material is obtained.

If necessary, two or more layers may be applied at the same time by the method as described in U.S. Patent 2,761,791 and British Patent 837,095.

Various means of exposure can be used in connection with the heat-developable photographic material of the present invention. Latent images are obtained by imagewise exposure by radiant rays including visible rays. Generally, light sources used for conventional color prints can be used, examples of which include tungsten lamps, mercury lamps, halogen lamps such as iodine lamps, xenon lamps, laser light sources, CRT light sources, fluorescent tubes and light-emitting diodes, etc.

The original may be line drawings or photographs having gradation. Further, it is possible to take a photograph of a portrait or landscape by means of a camera. Printing from the original may be carried out by contact printing by putting the original in close contact with the material or may be carried out by reflection printing or enlargement printing.

It is also possible to carry out the printing of images photographed by a videocamera or image informations sent from a television broadcasting station by displaying on a cathode ray tube (CRT) or a fiber optical tube (FOT) and focusing the resulting image on the heat-developable photographic material by contacting therewith or by means of a lens.

Recently, `light-emitting diode (LED) systems which have been greatly improved have begun to be utilized as an exposure means or display means for various apparatus and devices. It is difficult to produce an LED which effectively emits blue light. In this case, in order to reproduce the color image., three kinds of LEDs consisting of those emitting each green light, red light and infrared light are used. The photographic material to be sensitized by these lights is produced so as to release a yellow dye, a magenta dye and a cyan dye, respectively.

The photographic material is produced using a construction such that the green-sensitive part (layer) contains a yellow dye releasing compound, the red- sensitive part (layer) contains a magenta dye releasing compound and the infrared-sensitive part (layer) contains - a cyan dye releasing compound. Other combinations can be utilized, if necessary.

In addition to the above-described methods of contacting or projecting the original, there is a method of exposure wherein the original illuminated by a light source is stored in.a memory of a leading computer by means of a light-receiving element such as a phototube or a charge coupling device CCCD). The resulting information is, if necessary, subjected to processing, the so-called image treatment, and resulting image information is reproduced on CRT which can be utilized as an image-like light source or lights are emitted by three kinds of LED according to the processed information.

After the heat-developable color photographic material is exposed to light, the resulting latent image can be developed by heating the whole material to a suitably elevated temperature, for example, about 80°C to about 250°C for about 0.5 second to about 300 seconds. A higher temperature or lower temperature can be utilized to prolong or shorten the heating time, if it is within the above-described temperature range. Particularly, a temperature range of about 110°C to about 160°C is useful. As the heating means, a simple heat plate, iron, heat roller or analogues thereof may be used.

In the present invention, a specific method for forming a color image by heat-development comprises heat diffusion transfer of a hydrophilic diffusible dye. For this purpose, the heat-developable color photographic material is composed of a support having thereon a light-sensitive layer CI) containing at least silver halide, an organic silver salt oxidizing agent, a dye releasing redox compound which is also a reducing agent for the organic silver salt oxidizing agent and a hydrophilic binder, and an image receiving layer (II) capable of receiving the hydrophilic diffusible dye formed in the light-sensitive'layer (I).

A dye releasing activator may be incorporated either into the light-sensitive layer (I) or into the image receiving layer (II). Alternatively, means for supplying the dye releasing activator (for example, a rupturable pod containing the dye releasing activator, a roller in which the dye releasing activator is impregnated, an apparatus for spraying a solution containing the dye releasing activator, etc.) may be separately provided.

The above-described light-sensitive layer (I) and the image receiving layer (II) may be formed on the same support, or they may be formed on different supports, respectively. The image receiving layer (II) can be stripped off the light-sensitive layer (I). For example, after the heat-developable color photographic material is exposed imagewise to light, it is developed by heating uniformly and thereafter the image receiving layer (II) is peeled apart.

In accordance with another process, after the heat-developable color photographic material is exposed imagewise to light and developed by heating uniformly, the dye can be transferred on the image receiving layer (II) by superposing the image receiving layer on the light-sensitive layer (I) and heating to a temperature lower than the developing temperature. The temperature lower than the developing temperature in such a case includes room temperature and preferably a 'temperature from room temperature to a temperature not less than about 40°C lower than the heat-developing temperature. For example, a heat-developing temperature and a. transferring temperature are 120°C and 80°C, respectively. Further, there is a method wherein only the light-sensitive layer (I) is exposed imagewise to light and then developed by heating uniformly by superposing the image receiving layer (I_{I}) on the light-sensitive layer (I) .

The image receiving layer (II) can contain a dye mordant. In the present invention, various mordants can be used, and a useful mordant can be selected according to properties of the dye, conditions for transfer, and other components contained in the photographic material, etc. The mordants which can be used in the present invention include high molecular weight polymer mordants.

Polymer mordants to be used in the present invention are polymers containing secondary and tertiary amino groups, polymers containing nitrogen-containing hetero ring moieties, polymers having quaternary cation groups thereof, having a molecular weight of from 5,000 to 200,000, and particularly from 10,000 to 50,000.

For example, there are illustrated vinylpyridine polymers and vinylpyridinium cation polymers as disclosed in U.S. Patents 2,548,564, 2,484,430, 3,148,061 and 3,756,814, etc., polymer mordants capable of cross-linking with gelatin, etc., as disclosed in U.S. Patents 3,625,694, 3,859,096 and 4,128,538,. British Patent 1,277,453, etc., aqueous sol type mordants as disclosed in U.S. Patents 3,958,995, 2,721,852 and 2,798,063, Japanese Patent Application [OPI) Nos. 115228/79, 145529/79 and 126027/79, etc., water-insoluble mordants as disclosed in U.S. Patent 3,898,088, etc., reactive mordants capable of forming covalent bonds with dyes used as disclosed in U.S. Patent 4,168,976 (Japanese Patent Application (OPI) No. 137333/79), etc., and mordants disclosed in U.S. Patents 3,709,690, 3,788,855, 3,642,482, 3,488,706, 3,557,066, 3,271,147 and 3,271,148, Japanese Patent Application (OPI) Nos. 71332/75, 30328/78, 155528/77, 125/78 and 1024/78, etc.

In addition, mordants disclosed in U.S. Patents 2,675,316 and 2,882,156 can be used.

Of these mordants, those which migrate with difficulty from a mordanting layer to other layers are preferable; for example, mordants capable of cross-linking with a matrix such as gelatin, water-insoluble mordants, and aqueous sol (or latex dispersion) type mordants are preferably used.

Particularly preferable polymer mordants are described below.

(1) Polymers having quaternary ammonium groups and groups capable of forming covalent bonds with gelatin (for example, aldehyde groups, chloroalkanoyl groups, chloroalkyl groups, vinylsulfonyl groups, pyridinium-propionyl groups, vinylcarbonyl groups, alkylsulfonoxy groups, etc.), such as 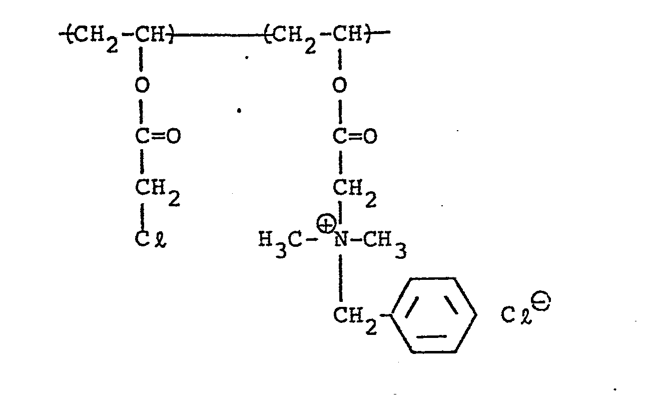
(2) Reaction products between a copolymer of a monomer represented by the following general formula with another ethylenically unsaturated monomer and a cross-linking agent (for example, bisalkanesulfonate, bisarenesulfonate, etc.): 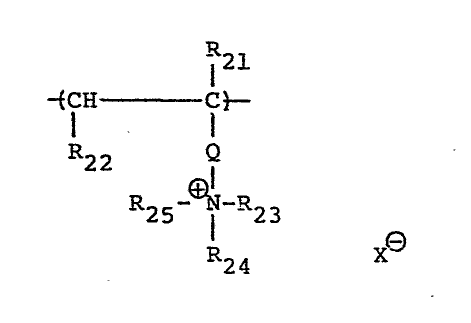 wherein R₂₁ represents H or an alkyl group, R₂₂ represents H, an alkyl group or an aryl group, Q represents a divalent group, R₂₃₁ R24 and R₂₅ each represents an alkyl group, an aryl group or at least two of R₂₃ to R₂₅ are bonded together to form a hetero ring, and X represents an anion. The above-described alkyl groups and aryl groups may be substituted.
(3) Polymers represented by the following general formula 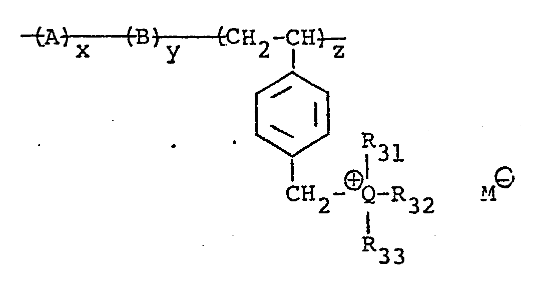 wherein x is from about 0.25 mol% to about 5 mol%, y is from about 0 mol% to about 90 mol%, z is from about 10 mol% to about 99 mol%, A represents a monomer having at least two ethylenically unsaturated bonds, B represents a copolymerizable ethylenically unsaturated monomer, Q represents N or P, R₃₁, R₃₂ and ^{R}₃₃ each represents an alkyl group or a cyclic hydrocarbon group or at least two of R₃₁ to R₃₃ are bonded together to form a ring (these groups and rings may be substituted), and M represents an anion.
(4) Copolymers composed of (a), (b) and (c), wherein
   (a) is 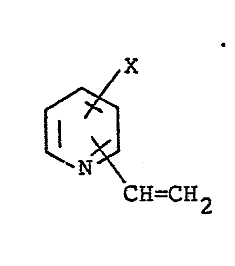 or 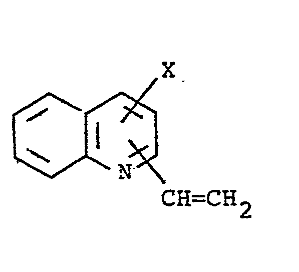 wherein X represents a hydrogen atom, an alkyl group or a halogen atom (the alkyl group may be substituted);
   (b) is an acrylic ester; and
   (c) is acrylonitrile.
(5) Water-insoluble polymers wherein at least 1/3 of the repeating units are those represented by the following general formula 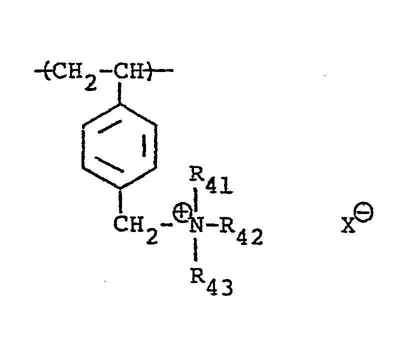 wherein R₄₁, R₄₂ and R₄₃ each represents an alkyl group, with the total number of carbon atoms being 12 or more (the alkyl group may be substituted), and X represents an anion.

Various kinds of known gelatins can be employed as gelatin for the mordant layer. For example, gelatin which is produced in a different manner such as lime-processed gelatin, acid-processed gelatin, etc., or a gelatin derivative which is prepared by chemically modifying gelatin such as phthalated gelatin, sulfonylated gelatin, etc., can be used. Also, gelatin subjected to a desalting treatment can be used, if desired.

The ratio of polymer mordant to gelatin and the amount of the polymer mordant coated can be easily determined by one skilled in the art depending on the amount of the dye to be mordanted, the type and composition of the polymer mordant and further on the image- forming process used. Preferably, the ratio of mordant to gelatin is from about 20/80 to 80/20 (by weight) and the amount of the mordant coated is from 0.5 to ^{g} g/m².

The image receiving layer (II) can have a white reflective layer. For example, a layer of titanium dioxide dispersed in gelatin can be provided on the mordant layer on a transparent support. The layer of titanium dioxide forms a white opaque layer, by which reflection color image of the transferred color images which is observed through the transparent support is obtained.

Typical image receiving materials for diffusion transfer are obtained by mixing the polymer containing ammonium salt groups with gelatin and applying the mixture to a transparent support.

The transfer of dyes from the photographic light-sensitive layer to the image receiving layer can be carried out using a transfer solvent. Examples of useful transfer solvents include water and an alkaline aqueous solution containing sodium hydroxide, potassium hydroxide and an inorganic alkali metal salt. Further, a solvent having a low boiling point such as methanol, N,N-dimethylformamide, acetone, diisobutyl ketone, etc., and a mixture of such a solvent having a low boiling point with water or an alkaline aqueous solution can be used. The transfer solvent can be employed by wetting the image receiving layer with the transfer solvent or by incorporating it in the form of water of crystallization or microcapsules into the photographic material.

The present invention will be explained in greater detail with reference to the following examples, but the present invention should not be construed as being limited thereto.

### EXAMPLE 1

40 g of gelatin and 26 g of potassium bromide were dissolved in 3,000 mi of water and the solution was stirred while maintaining the temperature at 50°C. A solution containing 34 g of silver nitrate dissolved in 200 mℓ of water was added to the above-described solution over a period of 10 minutes. Then, a solution containing 3.3 g of potassium iodide dissolved in 100 m£ of water was added for a period of 2 minutes. By controlling the pH of the silver iodobromide emulsion thus prepared precipitate was formed and the excess salts were removed. The pH of the emulsion was then adjusted to 6.0 and 400 g of the silver iodobromide emulsion was obtained.

In the following, a method of preparing a gelatin dispersion of a dye releasing redox compound is described.

A mixture of 10 g of Dye Releasing Redox Compound (26), 0.5 g of sodium 2-ethylhexylsulfosuccinate, 20 g of tricresyl phosphate (TCP) and 20 mi of cyclohexanone was heated at about 60°C to form a solution. The solution was mixed with 100 g of a 10% aqueous solution of gelatin and then dispersed using a homogenizer at 10,000 rpm for 10 minutes. The dispersion thus prepared is designated a dispersion of a dye releasing redox compound.

In the following, a method of preparing a light-sensitive coating is described.

(a) a light-sensitive silver iodobromide 5 g emulsion
(b) a dispersion of a dye releasing redox 3.5 g compound
(c) a solution containing 220 mg of guanidine trichloroacetate dissolved in 2 mℓ of methanol

The above-described components (a), (b) and (c) and 2 mℓ of water were mixed and dissolved by heating. The solution was coated on a polyethylene terephthalate film having a thickness of 180 µm at a wet thickness of 60 µm and dried. The sample thus prepared was exposed imagewise at 2,000 lux for 10 seconds using a tungsten lamp and then uniformly heated on a heat block for 30 seconds which had been heated at 150°C.

In the following, a method of preparing an image receiving material having an image receiving layer is described.

10 g of a copolymer of methyl acrylate and N,N,N-trimethyl-N-vinylbenzyl ammonium chloride (a ratio of methyl acrylate and vinyl benzyl ammonium chloride being 1:1) was dissolved in 200 mℓ of water and the solution was uniformly mixed with 100 g of a 10% aqueous solution of lime-processed gelatin. The mixture was uniformly coated on a polyethylene terephthalate film at a wet thickness of 20 µm and dried to prepare an image receiving material.

The image receiving material was soaked in water and superposed on the heated photographic light-sensitive material described above in order to bring them into contact with each of the surface layers. After 30 seconds, the image receiving material was peeled apart from the photographic light-sensitive material to obtain a negative magenta color image on the image receiving material. The optical density of the negative image was measured using a Macbeth transmission densitometer (TD-504). The maximum density and the minimum density to green light were 1.80 and 0.08, respectively. Further, the gradation of the sensitometric curve showed a density difference of 1.25 to an exposure difference of 10 times in the straight line part.

### EXAMPLES 2 TO 5 .

The same procedure as described in Example 1 was repeated except using 10 g of Dye Releasing Redox Compound (20) in place of Dye Releasing Redox Compound (26) to prepare Photographic Material No. 2.

In the same manner, Photographic Material Nos. 3 to 5 were prepared using 10.5 g of Dye Releasing Redox Compound (21), 10.5 g of Dye Releasing Redox Compound (24) and 11.0 g of Dye Releasing Redox Compound (27), respectively.

These Photographic Material Nos. 2 to 5 were subjected to the same process as described in Example 1 to obtain negative magenta color images on the image receiving materials. The results of the optical density measurement are shown in the following table.

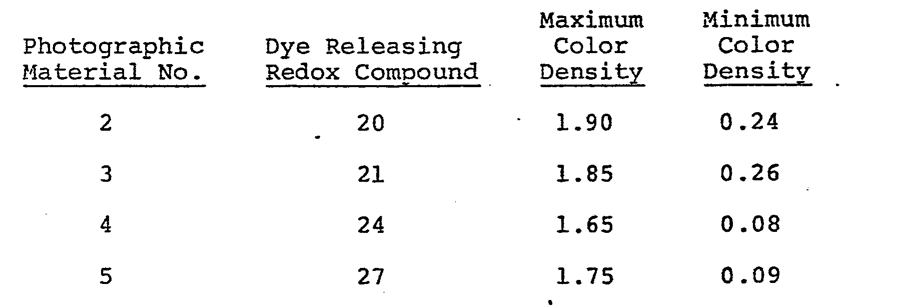

### EXAMPLE 6

The same procedure and process as described in Example 1 were repeated except without using guanidine trichloroacetate. As a result, only a faint magenta color image (having the maximum density of 0.18) was obtained. Then, the temperature of the heat block was raised to 180°C and the photographic material was uniformly heated for 30 seconds followed by the same transfer process as described in Example 1, a negative image having the maximum density of 0.60 and the minimum density of 0.15 was obtained.

### EXAMPLE 7

6.5 g of benzotriazole and 10 g of gelatin were dissolved in 1,000 mℓ of water and the solution was stirred while maintaining the temperature at 50°C. A solution containing 8.5 g of silver nitrate dissolved in 100 m£ of water was added to the above-described solution over a period of 2 minutes. Then, a solution containing 1.2 g of potassium bromide dissolved in 50 mℓ of water was added over a period of 2 minutes. By controlling the pH of the emulsion thus prepared precipitate was formed and excess salts were removed. The pH of the emulsion was.then adjusted to 6.0 and 200 g of the emulsion was obtained.

A light-sensitive coating was prepared in the same procedure as described in Example 1 except using the following components:
(a) a silver benzotriazole emulsion 10 g containing a light-sensitive silver bromide
(b) a dispersion of a dye releasing 3.5 g redox compound as described in .

### Example 2

### (c) a solution containing 0.25 g of guanidine trichloroacetate dissolved in 2 mℓ of methanol

Then, the same procedure and process as described in Example 1 were carried out. As a result, a negative magenta color image having the maximum density of 2.35 and the minimum density of 0.12 was obtained.

### EXAMPLE a

The same procedure and process as described in Example 1 were repeated except adding 0.4 g of 1-phenyl-4-methyl₋4-oxymethyl-3-pyrazolidinone as an auxiliary developing agent to the light-sensitive coating of Example 1. As a result, a magenta color image having the maximum density of 1.85 and the minimum density of 0.12 was obtained.

These results are almost the same as those obtained in Example 1 and this indicates that it is possible to form a sufficient image without using the auxiliary developing agent according to the present invention.

### EXAMPLE 9

In the dye transfer process as described in Example 1, an image receiving material was soaked in a 0.1 N aqueous sodium hydroxide solution in place of the soaking in water. As a result, a magenta color image having the maximum color density of 2.60 and the minimum color density of 0.40 was obtained.

### EXAMPLE 10

An emulsion was prepared using 3-amino-5-benzylthio-l,2,4-triazole in the following manner. 14 g of gelatin and 11.3 g of 3-amino-5-benzylthio-l,2,4-triazole were dissolved in a mixture of 1,000 m2 of water and 300 mℓ of methanol. The solution was maintained at 50°C with stirring to which a solution containing 8.5 g of silver nitrate dissolved in 50 mℓ of water was added for a period of 5 minutes. After standing for 5 minutes, a solution containing 1.2 g of potassium bromide dissolved in 50 mℓ of water was added for a period of 5 minutes. The temperature of the solution was decreased to 40°C and the undesirable salts were removed by a flocculation method to obtain 200 g of the emulsion.

The same procedure and process as described in Example 1 were repeated except using 10 g of the silver 3-amino-5-benzylthio-1,2,4-tri3zole emulsion containing light-sensitive silver bromide described above. As a result, a negative magenta color image having the maximum density of 2.25 and the minimum density of 0.10 was obtained on the image receiving material.

While the invention has been described in detail and with reference to specific embodiments thereof, it will be apparent to one skilled in the art that various changes and modifications can be made therein without departing from the spirit and scope thereof.

## Claims

1. A heat-developable color photographic material, comprising:
a support having thereon:
a light-sensitive silver halide;
a hydrophilic binder; and
a dye releasing redox compound represented by
a general formula selected from the group consisting of (Ia) and (Ib): 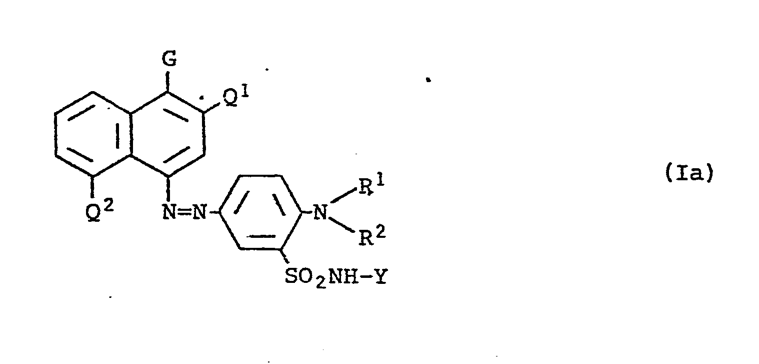 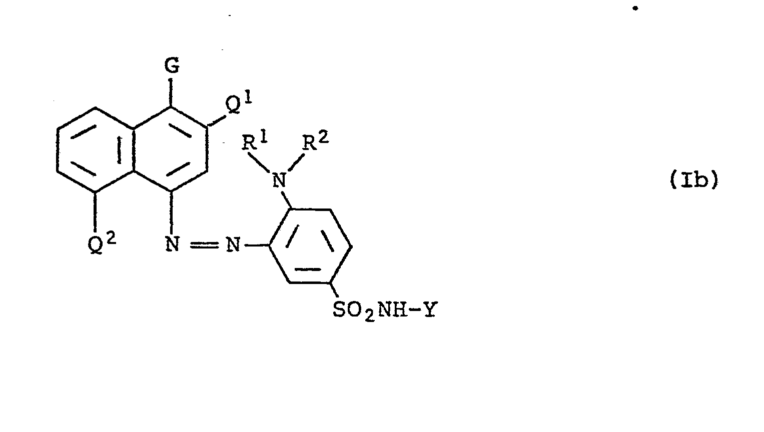 wherein Q¹ represents a hydrogen atom, a halogen atom, a sulfamoyl group represented by the formula -SO₂NR³R⁴ wherein R³ represents a hydrogen atom, an alkyl group or a substituted alkyl group; R⁴ represents a hydrogen atom, an alkyl group, a substituted alkyl group, an aralkyl group or an aryl group; and R³ and R 4 may combine directly or through an oxygen atom to form a ring; a group represented by the formula -SO₂R⁵ wherein R⁵ represents an alkyl group, a substituted alkyl group or an aralkyl group; a carboxy group, a group represented by the formula -COOR⁶ wherein R⁶ represents an alkyl group, a substituted alkyl group, a phenyl group or a substituted phenyl group; or a group represented by the formula -CONR³R⁴ wherein _{R}³ and R each has the same meaning as defined above; Q² represents a hydroxy group, . a group represented by the formula -NHCOR⁷ or a group represented by the formula -NHSO₂R⁷ wherein R⁷ represents an alkyl group, a substituted alkyl group, an aralkyl group or an aryl group; G represents a hydroxy group or a group capable of forming a hydroxy group by hydrolysis; R¹ and R², which may be the same or different, each represents an alkyl group or a substituted alkyl group; and R¹ and R² may combine with each other and represent an atomic group necessary to form a 5-membered or 6-membered heterocyclic ring; and _{Y} represents a group represented by a general formula selected from the group consisting of (II) to (IX): 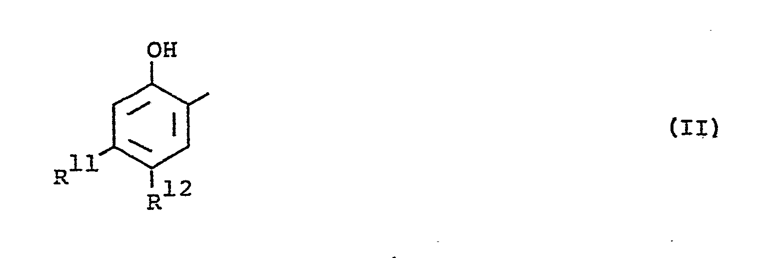 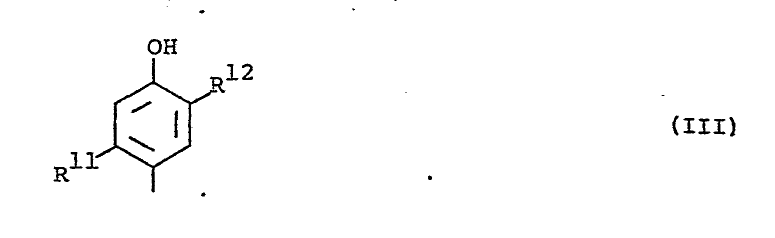 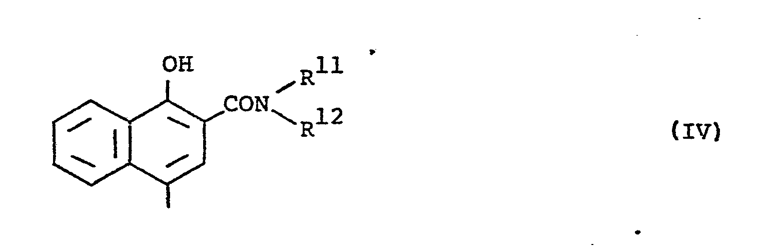 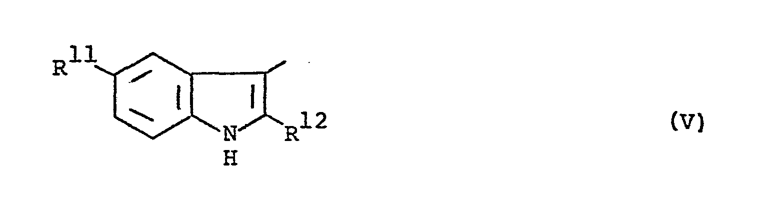 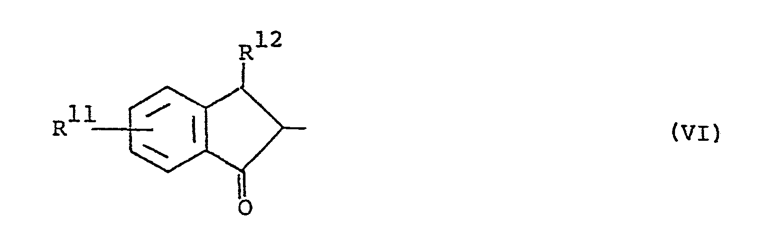 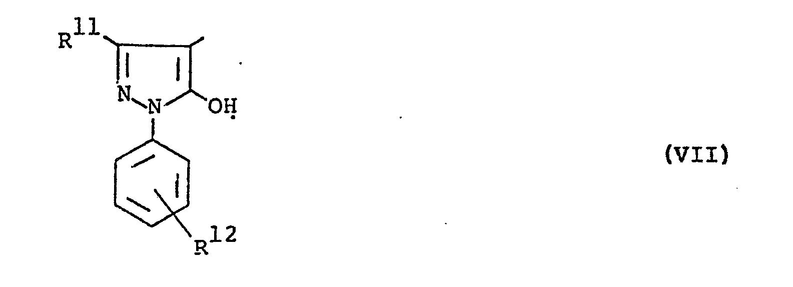 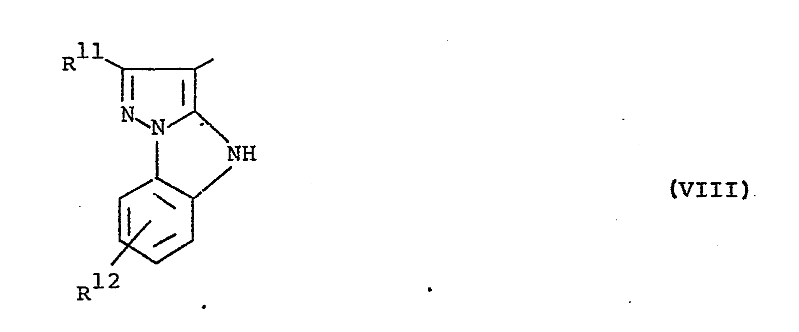 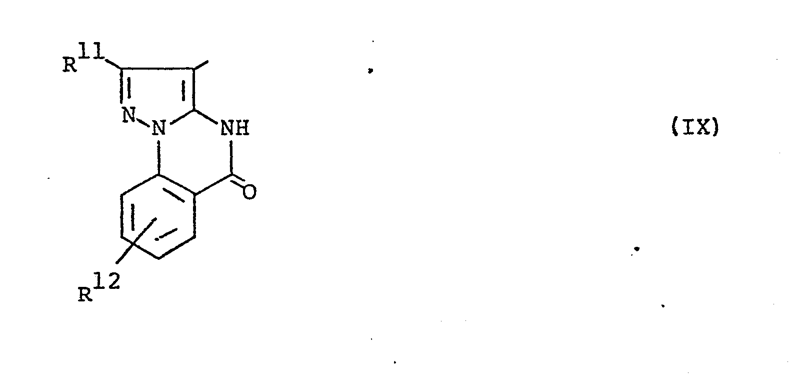 wherein _{R}¹¹ and _{R}¹² each represents a hydrogen atom or a substituent selected from an alkyl group, a cycloalkyl group, an aryl group, an alkoxy group, an aryloxy group, an aralkyl group, an acyl group, an acylamino group, an alkylsulfonylamino group, an arylsulfonylamino group, an aryloxyalkyl group, an alkoxyalkyl group, an N-substituted carbamoyl group, an N-substituted sulfamoyl group, a halogen atom, an alkylthio group or an arylthio group, and the alkyl moiety and the aryl moiety in the above-described substituents may be further substituted with an alkoxy group, a halogen atom, a hydroxy group, a cyano group, an acyl group, an acylamino group, a substituted carbamoyl group, a substituted sulfamoyl group, an alkylsulfonylamino group, an arylsulfonylamino group, a substituted ureido group or a carbalkoxy group, and the hydroxy group and the amino group included in Y may be protected by a protective group capable of reproducing the hydroxy group and the amino group by the action of a nucleophilic agent.

2. A heat-developable color photographic material as claimed in Claim 1, wherein the dye releasing redox compound is represented by the general formula (Ia).

3. A heat-developable color photographic material as claimed in Claim 1, wherein the alkyl group represented by R¹ or _{R}² is an alkyl group having from 1 to 6 carbon atoms.

4. A heat-developable color photographic material as claimed in Claim 1, wherein the substituted alkyl group is a substituted alkyl group having from 1 to 10 carbon atoms and is substituted with an alkoxy group or a halogen atom.

5. A heat-developable color photographic material as claimed in Claim 1, wherein the atomic group necessary to form a 5-membered or 6-membered heterocyclic ring of connecting R¹ and R² is a carbon atom chain or a. carbon atom chain including an oxygen atom.

6. A heat-developable color photographic material as claimed in Claim 1, wherein the sulfamoyl group represented by Q¹ is a sulfamoyl group represented by the formula -S0_{2NR}³R⁴ wherein _{R}³ is a hydrogen atom, an alkyl group having from 1 to 8 carbon atoms or a substituted alkyl group having from 1 to 8 carbon atoms in the alkyl moiety, R⁴ represents a hydrogen atom, an alkyl group having from 1 to 8 carbon atoms, a substituted alkyl group having from 1 to 8 carbon atoms in the alkyl moiety, an aralkyl group, a phenyl group or a substituted phenyl group having from 6 to 9 carbon atoms.

7. A heat-developable color photographic material as claimed in Claim 6, wherein R³ and _{R}⁴ each represents a hydrogen atom.

8. A heat-developable color photographic material as claimed in Claim 6, wherein one of R³ and _{R}⁴ represents a hydrogen atom and the other of R³ and _{R}⁴ represents an alkyl group having from 1 to 4 carbon atoms.

9. A heat-developable color photographic material as claimed in Claim 1, wherein Q^{l} is a group represented by the formula -SO₂R⁵ wherein R⁵ represents an alkyl group having from 1 to 3 carbon atoms, a substituted alkyl group having from 1 to 8 carbon atoms in the alkyl moiety or an aralkyl group.

10. A heat-developable color photographic material as claimed in Claim 9, wherein R⁵ represents an alkyl group having from 1 to 4 carbon atoms or a benzyl group.

11. A heat-developable color photographic material as claimed'in Claim 1, wherein Q¹ is a group represented by the formula -COOR⁶ wherein _{R}⁶ represents an alkyl group having from 1 to 8 carbon atoms, a substituted alkyl group having from 1 to 8 carbon atoms in the alkyl moiety, a phenyl group or a substituted phenyl group having from 6 to 9 carbon atoms.

12. A heat-developable color photographic material as claimed in Claim.1, wherein Q¹ is a group represented by the formula -_{CONR}³_{R}⁴ wherein _{R}³ is a hydrogen atom, an alkyl group having from 1 to 8 carbon atoms or a substituted alkyl group having from 1 to 8 carbon atoms in the alkyl moiety, R⁴ represents a hydrogen atom, an alkyl group having from 1 to 8 carbon atoms, a substituted alkyl group having from 1 to 8 carbon atoms in the alkyl moiety, an aralkyl group, a phenyl group or a substituted phenyl group having from 6 to 9 carbon atoms.

13. A heat-developable color photographic material as claimed in Claim 12, wherein _{R} ³ and R 4 each represents a hydrogen atom.

14. A heat-developable color photographic material as claimed in Claim 12, wherein one of R³ and R⁴ represents a hydrogen atom and the other of R³ and R⁴ represents an alkyl group having from 1 to 4 carbon atoms.

15. A heat-developable color photographic material as claimed in Claim 1, wherein the substituent for the substituted alkyl group represented by R³ to R⁶ is a cyano group, an alkoxy group, a hydroxy group, a carboxy group or a sulfo group.

16. A heat-developable color photographic material as claimed in Claim 1, wherein the substituent for the substituted phenyl group represented by R⁴ and R⁶ is a hydroxy group, a halogen atom, a carboxy group, a sulfo group or a sulfamoyl group.

17. A heat-developable color photographic material as claimed in Claim 1, wherein G represents an alkali metal salt of a hydroxy group or a photographically inert ammonium salt of a hydroxy group.

18. A heat-developable color photographic material as claimed in Claim 1, wherein G represents a hydrolyzable acyloxy group represented by the formula 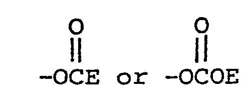 wherein E represents an alkyl group, a substituted alkyl group, a phenyl group or a substituted phenyl group.

19. A heat-developable color photographic material as claimed in Claim 1, wherein the group represented by Y contains a ballast group.

20. A heat-developable color photographic material as claimed'in Claim 19, wherein the ballast group contains a hydrophobic group having from 8 to 32 carbon atoms.

21. A heat-developable color photographic material as claimed in Claim 1, wherein an amount of the dye releasing redox compound is from 0.01 mol to 4 mols per mol of the silver halide.

22. A heat-developable color photographic material as claimed in Claim 1, wherein the color photographic material further contains a reducing agent.

23. A heat-developable color photographic material as claimed in Claim 22, wherein the reducing agent is an auxiliary developing agent.

24. A heat-developable color photographic material as claimed in Claim 23, wherein an amount of the auxiliary developing agent is from 0.01 time to 20 times by mol based on the silver halide.

25. A heat-developable color photographic material as claimed in Claim 1, wherein the light-sensitive silver halide is selected from the group consisting of silver chloride, silver chlorobromide, silver chloroiodide, silver bromide, silver iodobromide, silver chloroiodobromide and silver iodide.

26. A heat-developable color photographic material as claimed'in Claim 1, wherein the light-sensitive silver halide is selected from the group consisting of silver chloroiodide, silver iodobromide and silver chloroiodobromide each containing silver iodide crystal in its particle.

27. A heat-developable color photographic material as claimed in Claim 1, wherein the particle size of the silver halide is from 0.001 µm to 2 µm.

28. A heat-developable color photographic material as claimed in Claim 1, wherein the color photographic material further contains an organic silver salt oxidizing agent.

29. A heat-developable color photographic material as claimed in Claim 28, wherein the organic silver salt oxidizing agent is a silver salt which forms silver by reacting with the dye releasing redox compound when it is heated to a temperature of above.80°C in the presence of exposed silver halide.

30. A heat-developable color photographic material as claimed in Claim 28, wherein the organic silver salt oxidizing agent is a silver salt of an organic compound having a carboxy group, a silver salt of a compound containing a mercapto group or a thione group or a silver salt of a compound containing an imino group.

31. A heat-developable color photographic material as claimed in Claim 28, wherein the organic silver salt oxidizing agent is a silver salt of carboxylic acid derivative or an N-containing heterocyclic compound.

32. A heat-developable color photographic material as claimed in Claim 31, wherein the organic silver salt oxidizing agent is an N-containing heterocyclic compound.

33. A heat-developable color photographic material as claimed in Claim 28, wherein the organic silver salt oxidizing agent is present in a range from 0.1 mol to 200 mols per mol of the light-sensitive silver halide.

34. A heat-developable color photographic material as claimed in Claim 28, wherein the light-sensitive silver halide and the organic silver salt oxidizing agent are present in the same layer.

35. A heat-developable color photographic material as claimed in Claim 1, wherein the hydrophilic binder is gelatin or a gelatin derivative.

36. A heat-developable color photographic material as claimed in Claim 1, wherein the color photographic material further contains a dye releasing activator.

37. A heat-developable color photographic material as claimed in Claim 36, wherein the dye releasing activator is a substance which attacks nucleophilically a dye releasing redox compound oxidized by a silver halide or an organic silver salt oxidizing agent to release a diffusible dye.

38. A heat-developable color photographic material as claimed in Claim 36, wherein the dye releasing activator is a base, a base releasing agent or a water releasing compound.

39. A heat-developable color photographic material as claimed in Claim 36, wherein an amount of the dye releasing activator is from 1/100 to 10 times by molar ratio based on silver.

40. A heat-developable color photographic material as claimed in Claim 1, wherein the color photographic material further contains a thermal solvent.

41. A heat-developable color photographic material as claimed in Claim 1, wherein the color photographic material further comprises an image receiving layer capable of receiving a hydrophilic diffusible dye.

42. A heat-developable color photographic material as claimed in Claim 41, wherein the image receiving layer contains a dye mordant.

43. A heat-developable color photographic material as claimed in Claim 41, wherein the image receiving layer contains a polymer mordant and gelatin.

44. A heat-developable color photographic material as claimed in Claim 1, wherein the color photographic material further contains a transfer solvent.

45. A heat-developable color photographic material as claimed in Claim 44, wherein the transfer solvent is water, an alkaline aqueous solution, an organic solvent having a low boiling point or a mixture thereof.

46. A heat-developable color photographic material as claimed in Claim 1, wherein Q¹ is the sulfamoyl group represented by the formula -SO₂NR³R⁴.

47. A heat-developable color photographic material as claimed in Claim 1, wherein R¹ and R² combine to form a pyrrolidine ring or a morpholine ring, or R¹ represents -CH₂CH₂OCH₃ and R² represents an alkyl group having from 1 to 3 carbon atoms or a substituted alkyl group having from 1 to 3 carbon atoms; Q¹ represents a sulfamoyl group represented by the formula -SO₂NR³R⁴ wherein R³ and R4, which mav be the same or different, each represents a hydrogen atom or an alkyl group having from 1 to 4 carbon atoms or R³ and R⁴ combine directly or through an oxygen atom to form a 5- or 6-membered ring, Q² represents a hydroxy group or an -NHSO₂R⁷ group wherein R⁷ represents an alkyl group having from 1 to 4 carbon atoms; and Y represents a group represented by the general formulae(II) to (IX).

48. A heat-developable color photographic material as claimed in Claim 1, wherein the amino group of the formula -NR¹R² is positioned at the 4-position to the ₐzo group, R¹ and R² are to be bonded each other to form a pyrrolidine ring or a morpholine ring, Q represents a sulfamoyl group represented by the formula -SO₂NR³R⁴ wherein R³ and _{R}⁴, which may be the same or different, each represents a hydrogen atom or an alkyl group having from 1 to 4 carbon atoms; Q² represents a hydroxy group or an -NHSO₂R⁷ group wherein R⁷ represents an alkyl group having from 1 to 4 carbon atoms; and Y represents an o-hydroxyphenyl group substituted with an alkoxy group and an alkyl group.

49. A method of forming a color image which comprises imagewise exposing the heat-developable color photographic material as claimed in Claim 1, developing by heating the photographic material at a temperature from 80°C to 250°C to release a hydrophilic diffusible dye and transferring the diffusible dye into an image receiving material.

50. A method of forming a color image as claimed in Claim 49; wherein the transferring of the diffusible dye is carried out using a transfer solvent.

51. A method of forming a color image as claimed in Claim 50, wherein the transfer solvent is water, an alkaline aqueous solution, an organic solvent having a low boiling point or a mixture thereof..

52. A method of forming a color image as claimed in Claim 50, wherein the transfer solvent is water or an alkaline aqueous solution.

53. A method of forming a color image as claimed in Claim 49, wherein the image receiving material contains a mordant for the diffusible dye.

54. A method of forming a color image as claimed in Claim 53, wherein the mordant for the diffusible dye is a polymer mordant.
